(19) Europäisches Patentamt
European Patent Office
Office européen des brevets

(11) EP 2 532 161 B1

(12) # EUROPEAN PATENT SPECIFICATION

(45) Date of publication and mention of the grant of the patent:
**10.05.2017 Bulletin 2017/19**

(21) Application number: **10845363.0**

(22) Date of filing: **29.12.2010**

(51) Int Cl.:
***H04N 19/14*** $^{(2014.01)}$ ***H04N 19/182*** $^{(2014.01)}$
***H04N 19/86*** $^{(2014.01)}$ ***H04N 19/82*** $^{(2014.01)}$
***H04N 19/117*** $^{(2014.01)}$ ***H04N 19/176*** $^{(2014.01)}$

(86) International application number:
**PCT/SE2010/051494**

(87) International publication number:
**WO 2011/096869 (11.08.2011 Gazette 2011/32)**

(54) **DE-BLOCKING FILTERING CONTROL**

DEBLOCKIERUNGSFILTERKONTROLLE

COMMANDE DE FILTRAGE À DÉGROUPAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.02.2010 US 305005 P**
**05.02.2010 US 301732 P**

(43) Date of publication of application:
**12.12.2012 Bulletin 2012/50**

(73) Proprietor: **Telefonaktiebolaget LM Ericsson (publ)**
**164 83 Stockholm (SE)**

(72) Inventors:
- **NORKIN, Andrey**
  **SE-169 60 Solna (SE)**
- **ANDERSSON, Kenneth**
  **SE-802 63 Gävle (SE)**
- **PRIDDLE, Clinton**
  **Indooroopilly**
  **Queensland 4068 (AU)**

(74) Representative: **Ericsson et al**
**Patent Development**
**Torshamnsgatan 21-23**
**164 80 Stockholm (SE)**

(56) References cited:

| | |
|---|---|
| **WO-A1-02/096117** | **US-A1- 2003 138 150** |
| **US-A1- 2006 078 048** | **US-A1- 2006 110 056** |
| **US-A1- 2008 117 980** | **US-A1- 2008 123 750** |

- **HE Z: "Simplified H.264/AVC deblocking filter for SVC enh layer", 23. JVT MEETING; 80. MPEG MEETING; 21-04-2007 - 27-04-2007; SAN JOSÃ CR ,US; (JOINT VIDEO TEAM OF ISO/IEC JTC1/SC29/WG11 AND ITU-T SG.16 ),, no. JVT-W069, 19 April 2007 (2007-04-19), XP030007029, ISSN: 0000-0153**
- **BJÒONTEGAARD ET AL: "Simplified luma deblocking", 24. VCEG MEETING; 70. MPEG MEETING; 18-10-2004 - 22-10-2004; PALMA DEMALLORCA, ES; (VIDEO CODING EXPERTS GROUP OF ITU-T SG.16),, no. VCEG-X04, 13 October 2004 (2004-10-13) , XP030003421, ISSN: 0000-0453**
- **LIST P ET AL: "Adaptive deblocking filter", IEEE TRANSACTIONS ON CIRCUITS AND SYSTEMS FOR VIDEO TECHNOLOGY, IEEE SERVICE CENTER, PISCATAWAY, NJ, US, vol. 13, no. 7, 1 July 2003 (2003-07-01), pages 614-619, XP011221094, ISSN: 1051-8215, DOI: 10.1109/TCSVT.2003.815175**
- **MUHAMMAD NADEEM ET AL.: 'A high-throughput, area-efficient hardware accelerator for adaptive deblocking filter in H.264/AVC' IEEE/ACM/IFIP 7TH WORKSHOP ON EMBEDDED SYSTEMS FOR REAL-TIME MULTIMEDIA pages 18 - 27, XP031569119**
- **UGUR K. ET AL: 'High Performance, Low Complexity Video Coding and the Emerging HEVC Standard' IEEE TRANSACTIONS ON CIRCUITS AND SYSTEMS FOR VIDEO TECHNOLOGY vol. 20, no. 12, 18 November 2010, pages 1688 - 1697, XP011329410**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

TECHNICAL FIELD

The present invention generally relates to filtering control and in particular to controlling de-blocking filtering over block boundaries in a video frame.

BACKGROUND

Encoding of video frames may introduce blocking artifacts to the encoded data. Such blocking artifacts are mainly due to discrete cosine transforms in intra and inter frame prediction error coding. Discontinuities at boundaries between blocks can then become visible to a viewer during reconstruction. Another common source of blocking artifacts is motion compensated prediction.

The traditional approach of combating such blocking artifacts is to use de-blocking filtering. In state of the art video coding, such as H.264, loop filtering with an adaptive de-blocking filter is performed after prediction and residual coding, but before storage of the reconstructed frame for later reference when encoding the following frames, see List et al., Adaptive Deblocking Filter, IEEE Transactions on Circuits and Systems for Video Technology, 2003,13(7): 614-619. The loop filtering consists of filter decision, filtering operation, clipping function and change of pixel value. The decision to filter the border or not is made based on evaluating several conditions. The filter decision depends on macroblock type, motion vector (MV) difference between neighboring blocks, if one of the neighboring blocks has a coded residual and on the local structure of a current block or the neighboring blocks.

Then the amount of filtering depends on the position of the pixel compared to the block boundary and on the quantization parameter used for residual coding for the current block.

In H.264, a filter decision is made based on pixel values between the block boundary of two neighboring blocks. This applies both to the vertical block boundary and horizontal block boundary. The boundary can be illustrated by pixels a, b, c and d in one block and e, f, g and h in another block where the block boundary is between d and e, see below:

a b c d | e f g h

The filter decision is based on comparing three pixel differences with three thresholds. The thresholds are adapted to the quantization parameter (QP). If the following conditions are fulfilled the filter decision is positive $|d-e|<T_1$, $|c-d|<T_2$, and $|e-f|<T_2$, where $T_1$ and $T_2$ are adapted based on QP.

There are two filtering modes in H.264. In the first filtering mode (normal filtering), filtering can be described with a delta value ($\Delta$) that the filtering changes the current value. The filtering for the pixel closest to the block boundary is:

$$d' = d + \Delta_c \text{ and } e' = e - \Delta_c$$

where $\Delta_c$ has been clipped off to a threshold $\pm T_3$ to a value that is constrained by the QP. More filtering is allowed for high QP than for low QP. Clipping can be described as:

$$\Delta_c = \mathrm{Max}(-T_3, \mathrm{Min}(T_3, \Delta))$$

The filter strength can be increased if any of the following two conditions also holds $|b-d|<T_2$ and $|e-g|<T_2$. The filter strength is also adapted by clipping the delta value less, e.g. to allow for more variation.

The second (strong) filtering mode is only applied for an intra macroblock boundary, when the following condition is fulfilled $|d-e|< T_1/4$.

A significant limitation with the adaptive de-blocking filter employed in H.264 is that second, strong filtering mode can only be applied over macroblock edges if at least one of the blocks is an intra block. However, also small differences in nearly uniform image areas can also occur for other blocks than intra coded blocks and also within internal macroblocks. It would then be desired to be able to apply strong filtering also to such cases. However, it is then important that the filtering control is able to distinguish between true edges in the image and those that due to blocking artifacts.

US 2006/0078048 discloses a simplification applicable to de-blocking filtering in H.264 that reduces the computational complexity as compared to standard filtering decisions of H.264. The decision test for conducting normal filtering or no filtering is performed on one line or a subset of the lines crossing the boundary between two macroblocks. This decision then applies to all lines crossing the same boundary. As a consequence, a single filtering decision is calculated per macroblock boundary and this single filtering decision applies to all lines crossing the macroblock boundary.

He, Simplified H.264/AVC deblocking filter for SVC enhanced layer, Joint Video Team (JVT) of ISO/IEC & ITU-T VCEG (ISO/IEC JTC1/SC29/WG11 and ITU-T SG16 Q.6), 23rd Meeting: San Jose, California, USA, 21-27 April, 2007, document: JVT-W069 discloses a contribution that simplifies deblocking filtering for SVC enhanced layer. The contribution involves calculating the boundary strength to have a value of either 0 or 1 and check boundary condition and filtering by using only two pixels in each side of the block boundary of only the first pixel row if the boundary strength value is 1. If all conditions are true, the original deblocking process for H.264 is performed with a blocking strength value equal to 1 otherwise no deblocking is required.

A significant limitation with the adaptive de-blocking filtering disclosed in US 2006/0078048 is that only normal filtering can be conducted, which can lead to visible artifacts over block boundaries since stronger filtering is not possible.

SUMMARY

It is a general objective to provide an efficient de-blocking filtering to combat or reduce blocking artifacts. This and other objectives are met by embodiments as disclosed herein.

An aspect of the embodiments defines a filtering control method applicable to a block of multiple pixels in a video frame. The method involves calculating a first filter decision value for the block. The first filter decision value is representative of how smooth pixel values in a first line of pixels in the block and in a corresponding first line of pixels in a neighboring block of multiple pixels in the video frame are in a direction parallel to the filtering direction over the block boundary between the block and the neighboring block. A second filter decision value is also calculated for the block and is representative of how close pixel values in a current line of pixels in the block approximate a flat line and how close pixel values in a corresponding current line of pixels in the neighboring block approximate a flat line. The first filter decision value is then compared to a first threshold and the second filter decision value is correspondingly compared to a second threshold. If both filter decision values are below its respective threshold a strong de-blocking filter is selected for the current line of pixels to filter at least one of the pixel values in the current line. However, if not both filter decision values are below the respective thresholds, a weak deblocking filter is instead selected for the current line of pixels. The weak de-blocking filter has a comparatively lower filtering strength as compared to the strong de-blocking filter.

Another aspect of the embodiments relates to a filtering control device comprising a first decision value calculator configured to calculate a first filter decision value for a block of multiple pixels in a video frame.

The first filter decision value is, as mentioned in the aspect above, representative of how smooth pixel values in a first line of pixels in block and in a corresponding first line of pixels in the neighboring block of pixels in the video frame are in a direction parallel to the filtering direction. A second decision value calculator is implemented to calculate a second filter decision value for the block representative of how close pixel values in a current line of pixels in the block approximate a flat line and how close pixel values in a corresponding current line of pixels in the neighboring block approximate a flat line. The filtering control device also comprises a first threshold comparator and a second threshold comparator configured to compare the first and the second filter decision value to a first and a second threshold, respectively. A filter selector is connected to the first threshold comparator and second threshold comparator and is configured to select a strong de-blocking filter to filter at least one pixel value in the current line of pixels if the first filter decision value is below the first threshold and if the second filter decision value is below the second threshold. If both these conditions are not met the filter selector instead selects a weak de-blocking filter having a comparatively lower filtering strength as compared to the strong de-blocking filter.

Further aspects of the embodiments relates to an encoder and a decoder comprising a filtering control device and a media terminal comprising a decoder.

The aspects of the embodiments enable selection between strong and weak de-blocking filtering to combat blocking artifacts present at the boundary between two blocks of pixels in a video frame. According to the embodiments a strong de-blocking filter can be selected irrespective of the encoding mode, such as intra versus inter coding, of the blocks of pixels but rather based on the particular pixel values in the blocks and in respective lines of the blocks. This leads to a more efficient and better deblocking filtering.

BRIEF DESCRIPTION OF THE DRAWINGS

The invention, together with further objects and advantages thereof, may best be understood by making reference to the following description taken together with the accompanying drawings, in which:

Fig. 1 is a flow diagram illustrating a filtering control method according to an embodiment;

Figs. 2A and 2B illustrate two embodiments of neighboring blocks and a block boundary over which deblocking filtering can be applied;

Fig. 3 is a flow diagram illustrating additional steps of the method in Fig. 1 according to an embodiment;

Figs. 4A to 4C illustrate the effects of three different filtering decisions according to various embodiments;

Fig. 5 is a flow diagram illustrating an additional step of the method in Fig. 3 according to an embodiment;

Fig. 6 is a flow diagram illustrating an additional step of the method in Fig. 1 according to an embodiment;

Fig. 7 is a drawing schematically illustrating block-wise and line-wise filtering decisions according to an embodiment;

Fig. 8 is a flow diagram illustrating additional steps of the method of Fig. 1 according to an embodiment;

Fig. 9 is a flow diagram illustrating an additional step of the method of Fig. 8 according to an embodiment;

Fig. 10 is a flow diagram illustrating an additional step of the method of Fig. 1 according to an embodiment;

Fig. 11 is a schematic block diagram of an embodiment of a filtering control device;

Fig. 12 is a schematic block diagram of another embodiment of a filtering control device;

Fig. 13 is a schematic block diagram of a further embodiment of a filtering control device;

Fig. 14 illustrates an implementation of a filtering control device according to an embodiment;

Fig. 15 is an implementation of a filtering device according to another embodiment;

Fig. 16 is a schematic block diagram of an encoder according to an embodiment;

Fig. 17 is a schematic block diagram of a decoder according to an embodiment; and

Fig. 18 is a schematic block diagram of a media terminal according to an embodiment.

DETAILED DESCRIPTION

Throughout the drawings, the same reference numbers are used for similar or corresponding elements.

The embodiments generally relate to adaptive de-blocking filtering or adaptive loop filtering, as it is sometimes denoted, to combat blocking artifacts over block boundaries in a video frame. The embodiments introduce specific filter decisions that are employed to determine whether to apply strong filtering or weak filtering to respective pixel lines in the block. The particular filter decisions together with the possibility of using strong or weak filtering enables efficient reduction of blocking artifacts but without an increase in computation complexity.

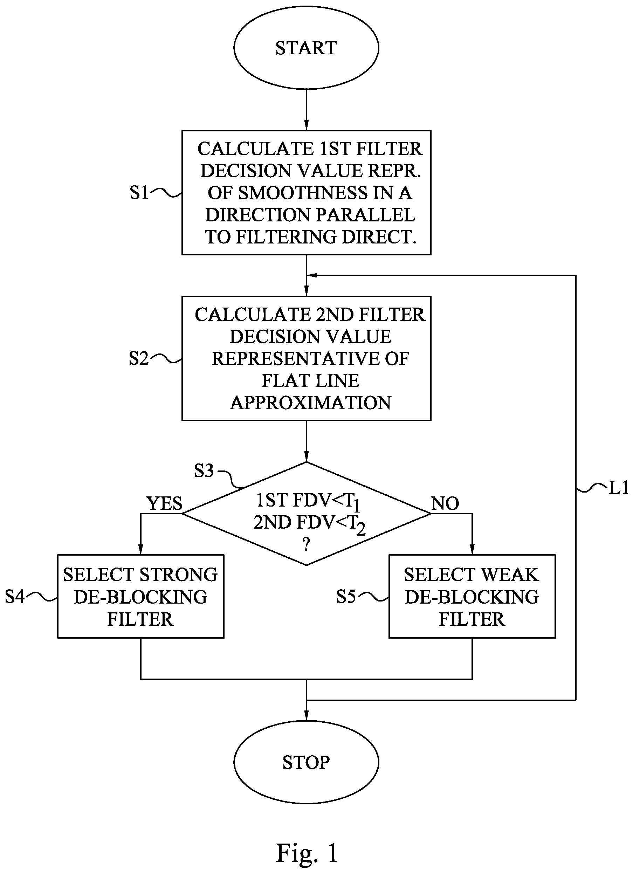

Fig. 1 is a flow diagram of a filtering control method according to en embodiment applicable to a block of multiple pixels in a video frame. As is well-known in the art, a video frame is divided into non-overlapping blocks of pixels that are encoded and decoded according to the various available intra and inter coding modes. Generally, a video frame is divided into non-overlapping macroblocks of 16×16 pixels. Such a macroblock can in turn be divided into smaller blocks of different sizes, such as 4×4 or 8×8 pixels. However, also rectangular blocks could be possible according to the embodiments, such as, 4×8, 8×4, 8×16 or 16×8. The embodiments can be applied to any such block of pixels, including macroblocks or even larger blocks of pixels. In a particular embodiment, the filtering control method is applicable to all blocks of multiple pixels having at least 8 pixels in the vertical direction and/or horizontal direction. In the art, prediction unit partition and transform unit are commonly employed to denote such a block of multiple pixels.

In the emerging High Efficiency Video Coding (HEVC) standard, coding units (CU) are used. The CU size is currently varying from 64×64 pixels (largest) to 4×4 pixels (smallest). In this way, the largest CU can be split into smaller CUs with the "level of granularity" depending on the local characteristics of the frame. That means that the largest CU may be split into smaller CUs of different sizes. The embodiments can also be used in connection with such coding units, which are regarded as being encompassed by the expression "block of pixels" as used herein.

Each pixel in the block has a respective pixel value. Video frames generally have color values assigned to the pixels, where the color values are represented in a defined color formats. One of the common color formats uses one luminance component and two chrominance components for each pixel, although other formats exist, such as using red, green and blue components for each pixel.

Traditionally, luminance component filtering and chrominance component filtering are done separately possibly employing different filtering decisions and different de-blocking filters. The embodiments can be applied to filter the luminance component, filter the chrominance component or filter both the luminance component and the chrominance component. In a particular embodiment, the embodiments are applied to achieve luminance or luma filtering.

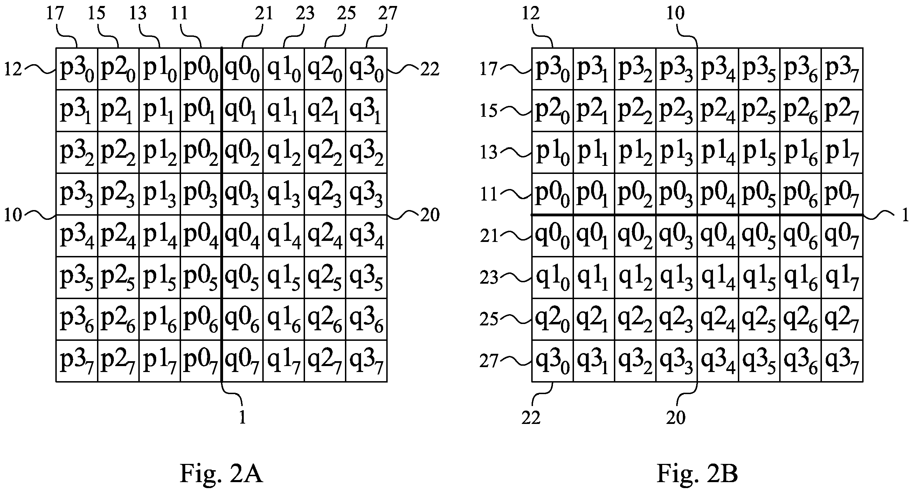

Adaptive de-blocking filtering is conducted over a boundary, edge or border between neighboring blocks. As a consequence, such boundaries can be vertical boundaries 1, see Fig. 2A, between two neighboring blocks 10, 20 present side by side in the video frame. Alternatively, the boundaries are horizontal boundaries 1, see Fig. 2B, between two neighboring block 10, 20, where one block 10 is positioned above the other block 20 in the video frame. In a particular embodiment, vertical boundaries are filtered first starting from the left-most boundary and proceeding through the boundaries towards the right-hand side in their geometrical order. Then, horizontal boundaries are filtered starting with the boundary on the top and proceeding through the boundaries towards the bottom in their geometrical order. The embodiments are, however, not limited to this particular filtering order and can actually be applied to any predefined filtering order. In a particular embodiment, the boundaries at the edge of the video frame are preferably not filtered and thereby excluded from the de-blocking filtering.

The method of this embodiment starts in step S1 where a first filter decision value is calculated for the block. This calculated filter decision value is representative of how smooth pixel values in a first line of pixels in the block and in a corresponding first line of pixels in a neighboring block in the video frame are in a direction parallel to the filtering direction. The first line of pixels in the current block and the corresponding line of pixels in the neighboring block belong to the same horizontal line extending over a vertical boundary or belong to the same vertical line extending over a horizontal boundary.

The first line of pixels in the block is preferably a predefined horizontal or vertical line of pixels. The first line thereby corresponds to a predefined pixel row or pixel column in the blocks of the video frame. For instance, the first line could correspond to row number $j$ or column number $j$ in the block. This then means that the first line of another block to be subsequently filtered would correspond to row number $j$ or column number $j$ in that another block.

The first filter decision thereby investigates the smoothness of the pixel values in a direction parallel to the filtering decision. In other words, the first filter decision investigates whether the pixel values in the first line in a block and the pixel values in a corresponding first line of a neighboring block are smooth, i.e. vary little or at least no more than a defined maximum amount, from a direction parallel to the filtering direction over the block boundary. Such smooth pixel values will give a zero or a low first filter decision value and should, though depending on the result from a second filter decision, generally be strongly filtered since the pixel values are smooth with no or very little structures.

A particular case of smooth pixel values in a direction parallel to the filtering direction could be if the pixel values of the first line approximate a plane and if the pixel values of the corresponding first line approximate a plane. The first filter decision could then be regarded as a detector for any planes on both sides of the boundary. The first filter decision value will therefore be equal to zero or at least close to zero when pixel values on both sides of the boundary form approximate planes. However, in some embodiments, horizontal/vertical lines crossing a vertical/horizontal boundary should be filtered although they do not form a plane but are smooth in the direction parallel to the direction of filtering.

A next step S2 calculates a second filter decision for the block. The second filter decision value is representative of how close pixel values in a current line of pixels in the block approximate a flat line and how close pixel values in a corresponding current line of pixels in the neighboring block approximate a flat line.

The current line of pixels is not, in contrast to the first line for the first filter decision, a fixed line in the block. Hence, a second filter decision value is preferably calculated for each line in the block so that each horizontal or vertical line will then preferably have a respective calculated second filter decision value, whereas a single filter decision value is calculated per vertical or horizontal boundary of the block.

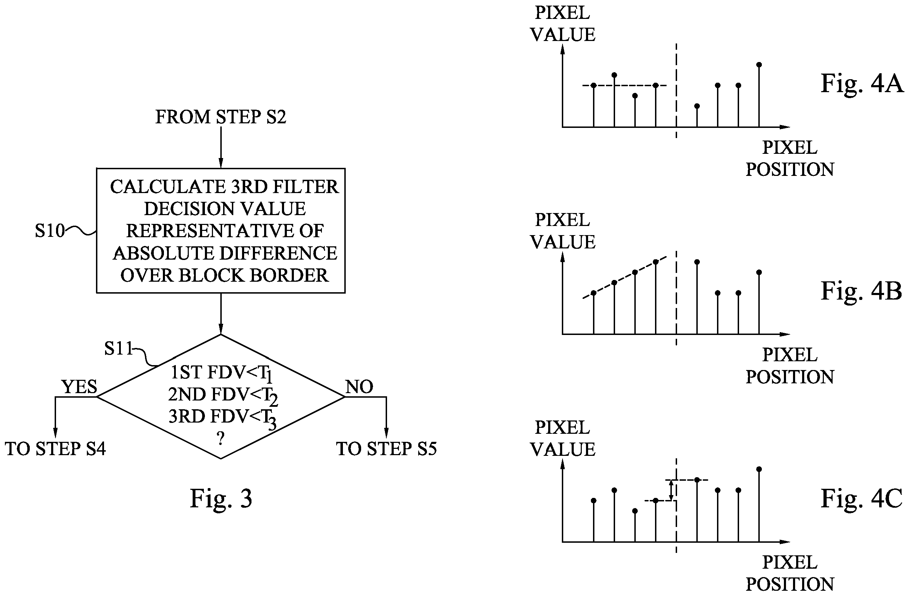

In clear contrast to the first filter decision that investigates the smoothness of pixel values in a direction parallel to the filtering direction and which therefore can produce a zero first filter decision value also for pixel values forming a ramp (see left part of Fig. 4B), the second filter decision investigates the flatness of pixel values. Pixel values in the current line and in the corresponding current line are regarded to approximate a flat line if the investigated pixel values of the block and the investigated pixel values of the neighboring block are equal or almost equal. In such a case, the second filter decision value will be zero or close to zero. If the pixel values approximate a flat line this means that the pixels in the current line and in the corresponding current line do not have any significant structures and strong filtering could be preferred to smooth any blocking artifacts.

A next step S3 compares the first filter decision value (FDV) with a first threshold ($T_1$) and compares the second filter decision value with a second threshold ($T_2$). If the first filter decision value is below the first threshold and the second filter decision value is below the second threshold, the method continues to step S4, where a second or strong de-blocking filter is selected to be applied to pixels in the current line of pixels to filter and change the value of at least one pixel value in the current line. However, if any of the first and second filter decisions is not below its associated threshold in step S3, the method instead continues to step S5, where a first, normal or weak de-blocking filter is instead selected. The weak de-blocking filter is then applicable to pixels in the current line of pixels to filter and change the value of the at least one pixel value in the current line. The strong de-blocking filter selected in step S4 has then a comparatively higher filtering strength as compared to the weak de-blocking filter selected in step S5.

Once the filter decision has been taken for a current line in the block with regard to the current block boundary, the method returns to step S2 to calculate a new second filter decision value for another line of pixels in the block, which is schematically illustrated by the line L1. Thus, the loop formed by steps S2-S5 is preferably performed once for all pixel rows in a block for a vertical boundary and once for all pixel columns in a block for a horizontal boundary. The different pixel rows or pixel columns can be processed sequentially starting, for instance, with the upper row or the left-most column and then proceeding towards the bottom row or the right-most column in the block. Alternatively, the different pixel lines in the block can be processed in parallel to speed up the filtering control method.

Thus, step S1 is preferably only performed once for the current boundary in the block, which means that for most blocks step S1 will be conducted twice: once for its vertical boundary to a neighboring block and once for its horizontal boundary to a neighboring block.

Various embodiments of the first and second filter decisions will now be described in more detail.

The second filter decision is, as was mentioned above, indicative of how close pixel values in a current line of pixels approximate a flat line and how close pixel values in a corresponding current line of pixels in the neighboring block approximate a flat line. In a particular embodiment, the second filter decision considers the pixel values in the ends of the line in the block and in the ends of the corresponding current line in the neighboring block. With reference to Figs. 2A and 2B, reference number 12 denotes a current line of pixels 11, 13, 15, 17 in the block 10 and the corresponding current line 22 of pixels 21, 23, 25, 27 in the neighboring block 20 extends along the same row (Fig. 2A) or the same column (Fig. 2B) as the current line 12 but on the other side of the boundary 1.

In this embodiment the second filter decision value is thereby calculated as $|p3_i - p0_i|+|q0_i - q3_i|$. In this formula and further herein $pk_i$ denotes the pixel value of a pixel at row number $i$ and column number $k$ in the block 10, see Fig. 2A, or the pixel value of a pixel at column number $i$ and row number $k$ in the block 10, see Fig. 2B. $qk_i$ correspondingly denotes the pixel value of a pixel in the neighboring block 20. In the particular block embodiment illustrated in Figs. 2A and 2B $k = 0,1, 2, 3$, $i = 0,1, 2, 3, 4, 5, 6, 7$ .

This means that the second filter decision is equal to the sum of the absolute difference between the pixel value of the pixel closest to, in the current line 12, the block boundary 1 and the pixel value of the pixel 17 third closest to (i furthest from in Figs. 2A and 2B), in the current line 12, the block boundary 1 and the absolute difference between the pixel value of the pixel 17 in the neighboring block 20 closest to, in the corresponding current line 22, the block boundary 1 and the pixel value of the pixel 27 in the neighboring block 20 third closest to (i furthest from in Figs. 2A and 2B), in the corresponding current line 22, the block boundary 1.

In an alternative embodiment, the second filter decision is calculated as $|p3_i-2p2_i-p1_i+2p0_i|+|q0_i-2q1_i-q2_i+2q3_i|$. The second filter decision is thereby, for a block of 4×8 or 8×4 pixels, based on calculating the absolute value of two times the pixel value of the pixel 11 closest to, in the current line 12, the block boundary plus the pixel value of the pixel 17 third closest to, in the current line 12, the block boundary 1 subtracted by the pixel value of the pixel 13 next closest to, in the current line 12, the block boundary 1 and subtracted by two times the pixel value of the pixel 15 second next closest to, in the current line 12, the block boundary 1. Also the absolute value is calculated of the pixel value of the pixel 21 in the neighboring block 20 closest to, in the corresponding current line 22, the block boundary 1 plus two times the pixel value of the pixel 27 in the neighboring block 20 third next closest to, in the corresponding current line 22, the block boundary 1 subtracted by two times the pixel value of the pixel 23 in the neighboring block 20 next closest to, in the corresponding current line 22, the block boundary 1 and subtracted by the pixel value of the pixel 25 in the neighboring block 20 second next closest to, in the corresponding current line 22, the block boundary 1. The sum of the two absolute values then constitutes the second filter decision value.

The benefit of this filter decision is that it does not give zero as output for a block boundary in the form of a ramp. It is further sensitive for edges and it attenuates the output for a linear increase of pixel values towards the block boundary.

The first filter decision value is representative of how smooth pixel values in the first line and in the corresponding first line are in a direction parallel to the filtering direction. In a particular embodiment, the first filter decision value is preferably based on $|p2_j - 2p1_j + p0_j|+|q2_i - 2q1_j + q0_j|$, where $j$ denotes the row number (Fig. 2A) or the column number (Fig. 2B) of the first line in the block 10 and the corresponding first line in the neighboring block 10. The first filter decision is thereby based on calculating the absolute value of the pixel value of the pixel closest to, in the first line, the block boundary 1 plus the pixel value of the pixel second next closest to, in said first line, the block boundary 1 subtracted by two times the pixel value of the pixel next closest to, in said first line, the block boundary 1. Also the absolute value of the pixel value of the pixel in the neighboring block 20 closest to, in the corresponding first line, the block boundary 1 plus the pixel value of the pixel in the neighboring block 20 second next closest to, in the corresponding first line, the block boundary 1 subtracted by two times the pixel value of the pixel of the neighboring block 20 next closest to, in the corresponding first line, the block boundary 1.

This filter decision embodiment checks whether the structures on both sides of the boundary are smooth in the direction parallel to the filtering direction.

In a particular embodiment the first filter decision value is calculated based on pixel values in the first line in the block and the first corresponding line in the neighboring block and in a second line in the block and a corresponding second line in the neighboring block. The first and second lines preferably correspond to predefined row numbers in the block (Fig. 2A) or predefined column numbers (Fig. 2B) and the corresponding first and second lines are the corresponding predefined row numbers or column numbers in the neighboring block.

The two lines are preferably distributed in the block. The first filter decision value could therefore be calculated as $|p2_2-2p1_2+p0_2|+|q2_2-2q1_2+q0_2|+|p2_5-2p1_5+p0_5|+|q2_5-2q1_5+q0_5|$. This means that an absolute value is calculated for row/column number two and row/column number five in the block 10 and for row/column number two and row/column number five in the neighboring block 20. Each absolute value is defined as the absolute value of the pixel value of said pixel closest to, in the relevant row/column, the block boundary 1 plus the pixel value of the pixel second next closest to, in the relevant row/column, the block boundary 1 subtracted by twice the pixel value of the pixel next closest to, in the relevant row/column, the block boundary 1.

Alternative embodiments for calculating the first filter decision value include $|p2_2-2p1_3+p0_4|+|q2_2-2q1_3+q0_4|+|p2_5-2p1_4+p0_3|+|q2_5-2q1_4+q0_3|$ or $|p2_2-2p1_3+p0_4+p2_5-2p1_4+p0_3|+|q2_2-2q1_3+q0_4+q2_5-2q1_4+q0_3|$. In these two embodiments, lines in the block 10 and the corresponding lines in the neighboring block 20 are diagonal lines of multiple pixels.

A further alternative is to calculate the first filter decision value based on pixel values not in two lines and corresponding lines as described above but rather based on pixel values in four lines in the block and four corresponding lines in the neighboring block: $\sum_{i=2}^{5}\left(\left|p2_i-2p1_i+p0_i\right|+\left|q0_i-2q1_i+q2_i\right|\right)$. Variants of this embodiment include using row/column number zero, three, four and seven, row/column number one, two, five and six, row/column number zero, three, five and six or row/column number one, two, four and seven. These embodiments can also be applied to only using two lines and two corresponding lines, such as row/column number two and five.

In the above presented embodiments, two different filter decisions are employed to determine whether to apply strong filtering or weak filtering for a current line of pixels in the block. In some applications it could be preferred to additionally use a third filter decision. The reason for this is that any changes to pixel values caused by strong filtering (step S4 in Fig. 1) are not bound. For instance, if at least the pixel values in the first line and in the current line of the block and the pixel values in the corresponding first line and in the corresponding current line of the neighboring block are fairly equal the first and second filter decision values will both be equal to or close to zero. However, it could be possible that the pixel values in the first line and in the current line, though being fairly equal, differs quite much from the pixel values in the corresponding first line and in the corresponding current line. Such a situation could occur if there is a true structure or edge aligned with the block boundary. This means that the edge is not due to any blocking artifact but is an inherent property of the particular video frame and should therefore not be filtered away. It could therefore be advantageously to add a third filter decision in order to detect such edges aligned with the block boundary.

Fig. 3 is a flow diagram illustrating usage of a third filter decision value that will bind any pixel value changes caused by strong filtering and detect edges aligned with the block boundary. The method continues from step S2 in Fig. 1. A next step S10 calculates a third filter decision value for the block. The third filter decision value is representative of an absolute difference between the pixel value of the pixel closest to, in the current line, the block boundary and the pixel value of the pixel in the neighboring block closest to, in the corresponding current line, the block boundary. In other words, the third filter decision value is preferably equal to $|p0_i-q0_i|$. A next step S11 then compares the first filter decision value from step S1 in Fig. 1 with the first threshold, the second filter decision value from step S2 in Fig. 1 with the second threshold and the third filter decision value from step S10 with a third threshold ($T_3$). If all of the filter decision values are below their respective associated threshold the method continues to step S4 of Fig. 1, where a strong de-blocking filter is selected to be applied to pixels in the current line. Otherwise the method continues from step S11 to step S5 of Fig. 1, which instead selects a weak de-blocking filter.

Thus, in this embodiment the first filter decision value is calculated, for a given block boundary, once for the current block, whereas the second and third filter decision values are preferably calculated for each line orthogonal to the block boundary.

Figs. 4A to 4C visually illustrate the effects of the three different filter decisions. In the diagrams the pixel values for the pixels in a line in the block and in the corresponding line in the neighboring block are illustrated. The block boundary is marked as a dashed vertical line in the figures. Fig. 4A corresponds to the second filter decision and investigates how close the pixel values in the current line and in the corresponding neighboring flat approximates a flat line. It is seen from the figure that the pixel values in the current line in the block can accurately be approximated with a flat line and will therefore give a value close to zero since the pixel values for the end pixels in the current line are equal in this example. However, the pixel values in the corresponding current line in the neighboring block cannot be approximated as a flat line. These pixels will therefore make a non-zero contribution to the first filter decision value.

Fig. 4B illustrates the pixel values along the first line and the corresponding first line in the block and the neighboring block. The pixel values of the pixel in the first line will be smooth in the direction parallel to the filtering direction. These pixel values in fact form a ramp and will make a zero contribution to a first filter decision value based on $|p2_j\text{-}2p1_j\text{+}p0_j|\text{+}|q2_j\text{-}2q1_j\text{+}q0_j|$. The pixel values in corresponding first line in the neighboring block will, however, make a non-zero contribution to the first filter decision value as they are not smooth in a direction parallel to the filtering direction.

Finally Fig. 4C illustrates the concept with the third filter decision value that is based on the absolute difference between the pixel values of the pixels closest to and on either side of the block boundary. If these values are equal or almost equal, the third filter decision value will be zero or small, whereas large differences will give rise to large third filter decision values and thereby prevent selection of strong de-blocking filtering for the current line.

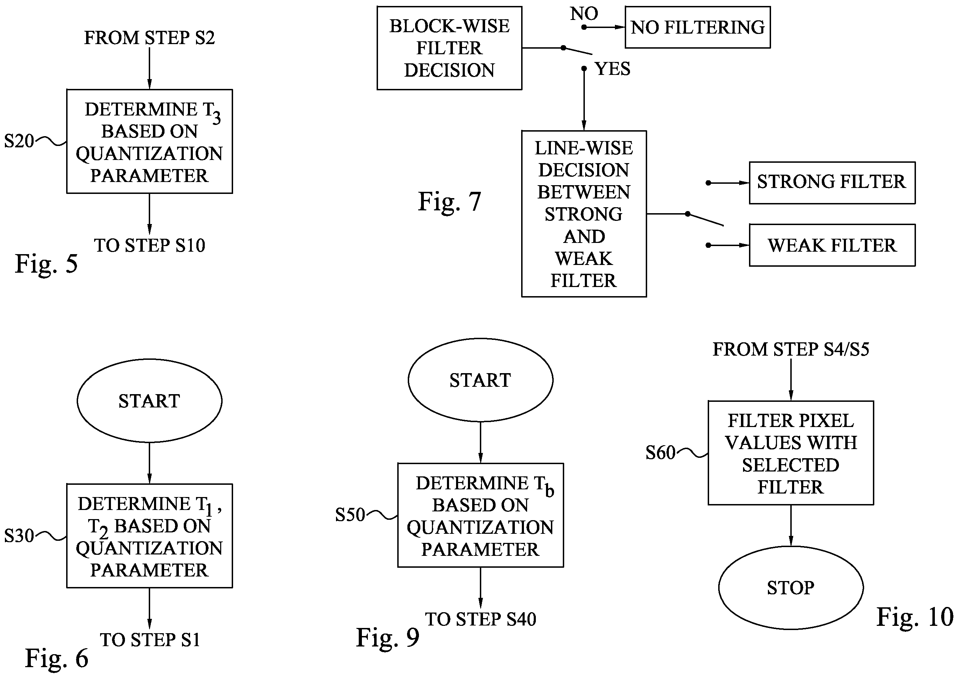

Fig. 5 is a flow diagram illustrating an additional step of the filtering control method. This flow diagram illustrates an embodiment of determining the third threshold to be compared to the third filter decision value. The method continues from step S2 of Fig. 1. A next step S20 determines the third threshold value based on a quantization parameter selected for the block. The quantization parameter is selected for residual coding of the block and controls the quality of video compression, which is well known in the art and therefore not further described herein.

The determination of the third threshold based on the quantization parameter in step S20 preferably comprises determining the third threshold as $T_3\text{=}a_1\times t_c$. The parameter $t_c$ represents a clipping threshold selected for the block based on the quantization parameter. The parameter $a_1$ is a multiplier selected to prevent selecting the strong de-blocking filter if strong filtering with the strong de-blocking filter modifies the pixel value of the pixel closest to, in the current line, the block boundary with a value that is larger than a value which weak filtering with the weak de-blocking filter and the clipping threshold will modify the pixel value. Experimental tests have been conducted and verify that $a_1$ = 2.5 performs well. Additionally, a value of 2.5 implies that the third threshold can be calculated without any divisions as $T_3$ = ($t_c$ × 5+1)>> 1, where X>>Y denotes right shift of X by $2^Y$, i.e. $X/2^Y$.

In an alternative embodiment, the parameter $a_1$ is determined based on the weak de-blocking filter selected in step S5 in Fig. 1. For instance, in the case of two flat blocks with the offset $f_1$ between the block and the neighboring block, the weak de-blocking filter according to H.264 (1 -4 4 -1)/8 interpolates the pixel values of the pixels closest to the block boundary with the value $p0_i{}'= p0_i + \frac{3}{8} f_1$ and $q0_i{}'= q0_i - \frac{3}{8} f_1$. In such a case, the parameter $a_1$ could be selected as 8/3 as in such a case strong filtering will not be selected for flat blocks if it will produce stronger artifacts than the parameter $t_c$ used to constrain weak filtering.

The above described embodiments of determining the third threshold value based on the quantization parameter will bind the absolute difference between the pixels value of the pixel in the current line closest to the block boundary and the pixel value of the pixel in the corresponding current line in the neighboring block closest to the block boundary to the value $t_c$.

The determination of the third threshold is actually only needed once for the block. This means that step S20 can advantageously be conducted between steps S1 and S2 in Fig. 1, in parallel with step S1 or indeed prior step S1 instead of following step S2 as indicated in Fig. 5.

Fig. 6 is a corresponding flow diagram illustrating a step of determining the first threshold and the second threshold to be used in connection with the first and second filter decision values. Step S30 determines the first threshold and the second threshold based on the quantization parameter selected for the current block. Furthermore, the second threshold is preferably determined to be equal to half the first threshold. In a particular embodiment, $T_1$ = β >> 2 and $T_2$ = β >> 3, where the parameter β is determined based on the quantization parameter (QP) of the block. Table 1 below defines possible values of $t_c$ and β for different possible quantization parameter values.

Table 1 - Relation between QP, $t_c$ and β

| QP | 0 | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| $t_c$ | 0 | 0 | 0 | 0 | 0 | 0 | 0 | 0 | 0 | 0 | 0 | 0 | 0 | 0 | 0 |
| β | 0 | 0 | 0 | 0 | 0 | 0 | 0 | 0 | 0 | 0 | 0 | 0 | 0 | 0 | 0 |
| QP | 15 | 16 | 17 | 18 | 19 | 20 | 21 | 22 | 23 | 24 | 25 | 26 | 27 | 28 | 29 |
| $t_c$ | 0 | 0 | 0 | 1 | 1 | 1 | 1 | 1 | 1 | 1 | 1 | 1 | 2 | 2 | 2 |
| β | 0 | 6 | 7 | 9 | 9 | 10 | 11 | 12 | 13 | 14 | 15 | 16 | 17 | 18 | 20 |
| QP | 30 | 31 | 32 | 33 | 34 | 35 | 36 | 37 | 38 | 39 | 40 | 41 | 42 | 43 | 44 |
| $t_c$ | 2 | 3 | 3 | 3 | 3 | 4 | 4 | 4 | 5 | 5 | 6 | 6 | 7 | 8 | 9 |

(continued)

| QP | 0 | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| β | 22 | 24 | 26 | 28 | 30 | 32 | 34 | 36 | 38 | 40 | 42 | 44 | 46 | 48 | 50 |
| QP | 45 | 46 | 47 | 48 | 49 | 50 | 51 | 52 | 53 | 54 | 55 | | | | |
| $t_c$ | 9 | 10 | 10 | 11 | 11 | 12 | 12 | 13 | 13 | 14 | 14 | | | | |
| β | 52 | 54 | 56 | 58 | 60 | 62 | 64 | | | | | | | | |

In such a case, a single look-up table, such as Table 1, can be used to derive all the threshold values employed in the three filter decisions using a single input, i.e. the quantization parameter determined for the current block.

The above described two or preferably three filter decisions are employed to select whether to use strong filtering or weak filtering for a current line of pixels in the block. These filter decisions are preferably accompanied by a filter decision used to determine whether any filtering is to be applied at all. Such an additional filter decision could be a line-based filter decision in similarity to the second and third filter decisions. However, doing such a line-based filter decision whether to filter or not for each line can sometimes be regarded as too computationally complex. In such a case, it could be more advantageous to use a block-based or block-wise filter decision that applies to all lines in the block and for the current block boundary. Fig. 7 illustrates this concept. A first block-wise filter decision is calculated once for the block and the relevant block boundary. This block-wise filter decision is employed to decide whether to conduct de-blocking filtering for the block and the block boundary or not conduct any de-blocking filtering for the block and the block boundary. Once this block-wise filter decision has been taken and if it concluded that de-blocking filtering should be performed the line-wise filter decisions, i.e. first and second filter decisions and preferably first, second and third filter decisions, are employed to select whether a current line should be filtered with a strong de-blocking filter or a weak de-blocking filter.

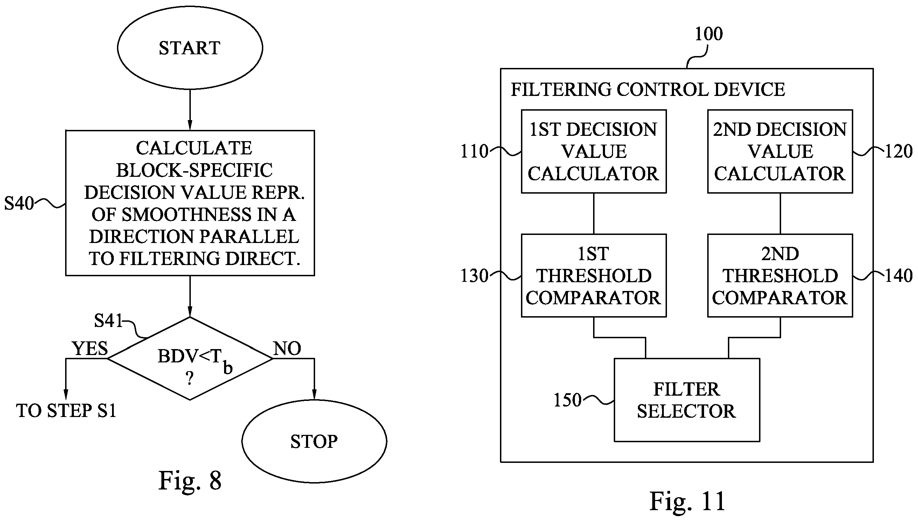

Fig. 8 is a flow diagram illustrating such block-wise or block-specific filter decision. The method starts in step S40, which calculates a block-specific decision value for the current block and the relevant block boundary. The calculated block-specific decision value is representative of how smooth pixel values in the first line of pixels in the block and in the corresponding first line of pixels in the neighboring block are in a direction parallel to the filtering direction and how smooth pixel values in the second line of pixels in the block and in the corresponding second line of pixel in the neighboring block are in a direction parallel to the filtering direction. A next step S41 compares the block-specific decision value calculated in step S40 with a block-specific threshold ($T_b$). If the block-specific decision value is not below the block-specific threshold the method ends and no de-blocking filtering is to be conducted for the current block and the relevant block boundary. However, if the block-specific decision value is below the block-specific threshold de-blocking filtering is to be applies to the block and the method continues to step S1 of Fig. 1, where the decision is made between strong and weak de-blocking filtering.

In a particular embodiment, the block-specific filter decision value calculated in step S40 is equal to the first filter decision value previously described. The above described embodiments for the first filter decision value can therefore also apply to the block-specific filter decision value. Hence, in a particular embodiment the block-specific filter decision value is calculated as $|p2_2\text{-}2p1_2\text{+}p0_2|\text{+}|q2_2\text{-}2q1_2\text{+}q0_2|\text{+}|p2_5\text{-}2p1_5\text{+}p0_5|\text{+}|q2_5\text{-}2q1_5\text{+}q0_5|$. However, even if the block-specific filter decision value is preferably calculated to be equal to the first filter decision value, the block-specific threshold does not need to be equal to the first threshold, and is preferably not equal to the first threshold.

Fig. 9 is a flow diagram illustrating a method of determining the block-specific threshold. The method starts in step S50 where the block-specific threshold is determined based on the quantization parameter determined for the current block. In a particular embodiment, the block-specific threshold is determined from a look-up table, such as Table 1 above, based on the quantization parameter selected for residual coding of the block.

An embodiment of step S50 determines the block-specific threshold based on the quantization parameter. The first threshold is then preferably determined to be equal to one fourth of the block-specific threshold and the second threshold is preferably determined to be equal to one eight of the block-specific threshold. In a particular embodiment, $T_b = \beta$, $T_1 = \beta >> 2$ and $T_2 = \beta >> 3$, where β is selected based on the quantization parameter, such as defined in Table 1.

In an embodiment, additional conditions or criteria can be used in addition to the block-specific filter decision in order to decide whether a block boundary between a current block A and a neighboring block B should be filtered. Examples of such additional conditions include:

i) block A or block B has prediction mode (PredMode) equal to intra (MODE_INTRA);
ii) block A or block B has nonzero transform coefficients;
iii) block A or block B use different reference frames or different number of motion vectors;
iv) one motion vector is used to predict block A and one motion vector is used to predict block B and the absolute difference between the horizontal or vertical component of the motion vectors used is greater than or equal to four in units of quarter luma frame samples;

v) two motion vectors and two different reference pictures are used to predict block A and two motion vectors for the same two reference pictures are used to predict block B and the absolute difference between the horizontal or vertical component of the two motion vectors used in the prediction of the two blocks for the same reference picture is greater than or equal to four in units of quarter luma frame samples;

vi) two motion vectors for the same reference picture are used to predict block A and two motion vectors for the same reference picture are used to predict block B and the absolute difference between the horizontal or vertical component of the corresponding motion vectors used in the prediction of the two partitions is greater than or equal to four in units of quarter luma frame samples.

The above presented conditions i) to vi) are preferably alternatives. This means that if any of the conditions i) to vi) are met for a current block A and if the block-specific filter decision is true, deblocking filtering should be applied over the block boundary and a strong or weak de-blocking filter should be selected for each line of pixels in the block. This also implies that if none of the conditions i) to vi) are met for a current block A, no de-blocking filtering is preferably conducted for block A and the relevant boundary.

Fig. 10 is a flow diagram illustrating an additional step of the method illustrated in Fig. 1. The method continues from step S4 or S5 in Fig. 1. A next step S60 filters pixel values in the current lines of pixels with the selected de-blocking filter. This means that if the method continues from step S4 in Fig. 1, step S60 filters the pixel values with a strong de-blocking filter.

The embodiments can be applied in connection with any strong de-blocking filter employed in the art to combat blocking artifacts. In a particular embodiment, the strong de-blocking filtering is performed with the following set of operations:

$$p0_i' = (p2_i + 2p1_i + 2p0_i + 2q0_i + q1_i + 4) >> 3$$

$$p1_i' = (p2_i + p1_i + p0_i + q0_i + 2) >> 2$$

$$p2_i = (2p3_i + 3p2_i + p1_i + p0_i + q0_i + 4) >> 3$$

$$q0_i' = (p1_i + 2p0_i + 2q0_i + 2q1 + q2_i + 4) >> 3$$

$$p1_i' = (p0_i + q0_i + q1_i + q2_i + 2) >> 2$$

$$q2_i' = (p0_i + q0_i + q1_i + 3q2_i + 2q3_i + 4) >> 3$$

where *i* represents the current line in the block. Hence, with reference to the blocks in Figs. 2A and 2B $i = 0, \ldots, 7$. In the equations above $pk_i' qk_i'$, $k$=0...2, represent the modified pixel values in the block and the neighboring block respectively, after filtering.

The modified pixel values are preferably also clipped to be forced to be within an allowed pixel value range. In a particular embodiment, the clipping operation forces the modified pixel values to be present within the range of [0, 255], allowing 256 different pixel values. This means that if the modified pixel value after filtering is smaller than 0 or larger than 255 it is replaced by 0 or 255, respectively.

If the comparison in step S3 of Fig. 1 instead results in that the method continues to step S5 of Fig. 1, step S60 filters the pixel values with a weak de-blocking filter.

The embodiments can be applied in connection with any weak de-blocking filter employed in the art to combat blocking artifacts. In a particular embodiment, the weak de-blocking filtering is performed with the following set of operations:

$$p0_i' = p0_i + \Delta_0$$

$$q0_i' = q0_i - \Delta_0$$

The value $\Delta_0$ is calculated in a two-step process with the calculation of an initial $\Delta_0 i$ value, followed by clipping of this value before it is applied to the equations above. In a particular embodiment, $\Delta_0 i=(p1_i-4p0_i+4q0_i-q_i+4)>>3$. The impulse response of the weak de-blocking filter is (1, 4, 4 - 1)/8. The clipping range of $\Delta_0 i$ is determined based on the quantization parameter of the block.

In this embodiment, the values $p1_i,q1_i$ are modified if additional filter conditions are met otherwise the pixel values are not modified. In an embodiment, $p1_i$ is modified if $|p2_i-p0_i|<T_4$, where $T_4$ represents a fourth threshold and is preferably determined based on the quantization parameter of the block. If this condition is true, $p1_i'=p1_i+\Delta_{p1}$. The value $\Delta_{p1}$ is also calculated in a two-step process starting with calculating an initial value $\Delta_{p1i}=(p2_i+((p0_i+q0_i+1)>>1)-2p1_i)>>1$. The corresponding impulse response is (1, 0, 0.5, 0.5)/2. $\Delta_{p1}$ is then determined as $\Delta_{p1}=Min(Max(-t_c,\Delta_{p1i}),t_c)$, where $t_c$ is determined based on the quantization parameter of the block and could be determined from a look-up table, such as Table 1 above.

Correspondingly, $q1_i$ is modified if $|q2_i-q0_i|<T_4$. If this condition is true, $q1_i'=q1_i+\Delta_{q1}$. The value $\Delta_{q1}$ is also calculated in a two-step process starting with calculating an initial value $\Delta q1_i=(q2_i+((q0_i+p0_i+1)>>1)-2q1_i)>>1$ with impulse response (0.5, 0.5, 0, 1)/2. $\Delta q_1$ is then determined as $\Delta_{q1}=Min(Max(-t_c,\Delta_{q1i}),t_c)$.

In an embodiment, the clipping range for $\Delta_0 i$ is determined based on the value $t_C$ and the evaluation of the conditions $|p2_i-p0_i|<T_4$ and $|q2_i-q0_i|<T_4$. In such a case, a clipping value $t_C'$ is first set equal to $t_C$ and is then incremented by one for each of the conditions $|p2_i-p0_i|<T_4$ and $|q2_i-q0_i|<T_4$ that are met. In an embodiment, $\Delta_0=Min(Max(-t_C',\Delta_{0i}),t_C')$.

In an alternative embodiment, $\Delta_{p1i}=(((((p0_i+q0_i+1)>>1)+p2_i+1)>>1)-p1_i)>>1$ and $\Delta_{q1i}=(((((p0_i+q0_i+1)>>1)+q2_i+1)>>1)-q1_i)>>1$. The impulse responses are (2, 4, 1, 1)/8 and (1, 1, 4, 2)/8. This filtering provides better interpolation properties for the pixel values $p2_i,q2_i$ compared to using a filter with filter taps (1, 0, 0.5, 0.5)/2. This also reduces the risk of unintentionally introducing artificial edges.

In another embodiment, the weak filtering is performed according to the following operations:

$$\Delta = Clip(-t_C, t_C, (13(q0_i - p0_i) + 4(q1_i - p1_i) - 5(q2_i - p2_i) >> 5))$$

$$p0_i' = Clip(0,255,(p0_i + \Delta))$$

$$q0_i' = Clip(0,255,(q0_i - \Delta))$$

$$p1_i' = Clip(0,255,(p1_i + \Delta/2))$$

$$q1_i' = Clip(0,255,(q1_i - \Delta/2))$$

where $Clip(a,b,X)= Min(Max(a,X),b)$.

Fig. 11 is a schematic block diagram of a filtering control device 100 according to an embodiment. The filtering control device 100 comprises a first decision value calculator 110 configured to calculate a first filter decision value for a block of multiple pixels in a video frame. The first decision value calculator 110 calculates a first filter decision value that is representative of how smooth pixel values in a first line of pixel in the block and in a corresponding first line of pixels in the neighboring block are in a direction parallel to a filtering direction.

A first threshold comparator 130 is configured to compare the first filter decision value calculated by the first decision value calculator 110 with a first threshold.

A second decision value calculator 120 is implemented in the filtering control device 100 to calculate a second filter decision value for the block representative of how close pixel values in a current line of pixels in the block approximate a flat line and how close pixel values in a corresponding current line of pixels in the neighboring block approximate a flat line.

The second filter decision value calculated by the second decision value calculator 120 is compared to a second threshold by a second threshold comparator 140.

The filtering control device 100 additionally comprises a filter selector 150 configured to select a strong de-blocking filter to filter at least one pixel value in the current line of pixels if the first filter decision value is below the first threshold as determined by the first threshold comparator 130 and if the second filter decision value is below the second threshold as determined by the second threshold comparator 140. Otherwise the filter selector 150 is configured to select a weak de-blocking filter to filter at least one pixel value in the current line of pixels.

The filtering control device 100 thereby operates on and investigates each line of pixels for a current block boundary. This means when moving to a second or new current line of pixels in the block, the second decision value calculator 120 calculates a new second filter decision value. However, the first decision value calculator 110 preferably does not need to calculate a new first filter decision value. In clear contrast, one and the same first filter decision value is preferably applicable to and can be used for all lines of pixels in the block and with regard to the relevant block boundary.

The first and second decision value calculators 110, 120 can be configured to calculate the first and second filter decision values, respectively, according to any of the previously discussed embodiments. For instance, the second decision value calculator 120 advantageously calculates the second filter decision value as $|p3_i-p0_i|+|q0_i-q3_i|$. Correspondingly, in a particular embodiment the first decision value calculator is configured to calculate the first decision value based on $|p2_j-2p1_j+p0_j|+|q2_j-2q1_j+q0_j|$ and preferably calculate the first filter decision value as $|p2_2-2p1_2+p0_2|+|q2_2-2q1_2+q0_2|+|p2_5-2p1_5+p0_5|+|q2_5-2q1_5+q0_5|$.

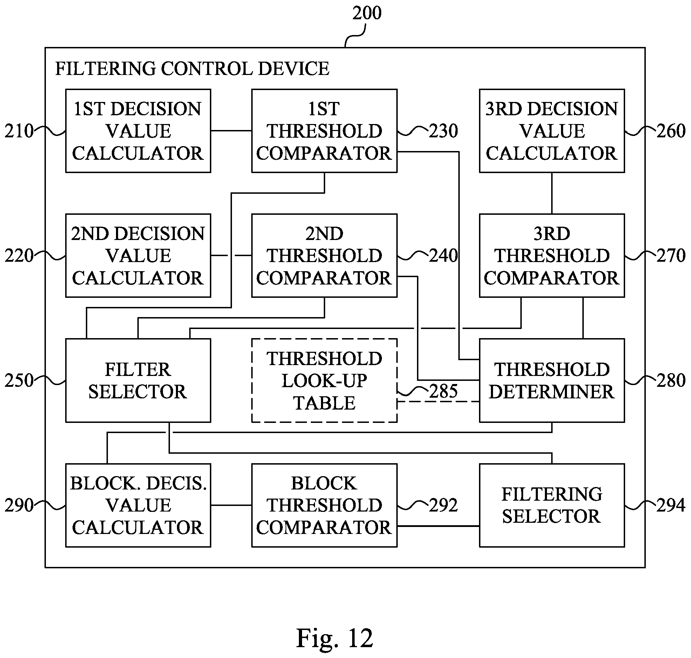

Fig. 12 is a schematic block diagram of another embodiment of a filtering control device 200. The operations of the first decision value comparator 210, the first threshold comparator 230, the second decision value calculator 220 and the second threshold comparator 240 are basically the same as the above-described embodiment illustrated in Fig. 11. These units 210, 220, 230, 240 of the filtering control device 200 are therefore not discussed further.

The filtering control device 200 comprises a third decision value calculator 260 configured to calculate a third filter decision value for the block. The third filter decision value is representative of an absolute difference between the pixel value of the pixel in the current line closest to the block boundary and the pixel value of the pixel in the corresponding current line closest to the block boundary, i.e. $|p0_i-q0_i|$. A third threshold comparator 270 is implemented in the filtering control device 200 to compare the third filter decision value calculated by the third decision value calculator with a third threshold. The filter selector 250 is then configured to select the strong de-blocking filter if the first filter decision value is below the first threshold, the second filter decision value is below the second threshold and if the third filter decision value is below the third threshold as determined by the third threshold comparator 270. If not all of these conditions are met, the filter selector 250 instead selects a weak de-blocking filter to filter at least one pixel value in the current line of pixels.

The filtering control device 200 preferably comprises a threshold determiner 280 configured to determine the first, second and third threshold employed by the first, second and third threshold comparators 230, 240, 270, respectively. In a particular embodiment, the threshold determiner determines the three thresholds for the block based on the quantization parameter selected for residual coding of the block.

In a particular embodiment, the threshold determiner 280 is configured to determine the third threshold to be $a_1 \times t_c$ as previously described, and preferably to be $2.5t_c$. The threshold determiner 280 additionally preferably determines the second threshold to be equal to half the threshold and advantageously to be $T_1$=β>>2 and $T_2$=β>>3. The values $t_c$, β are preferable dependent on the quantization parameter of the block and are preferably determined by the threshold determiner 280 based on a threshold look-up table 285 using the quantization parameter as input.

In an embodiment, the filtering control device 200 also or additionally comprises a block decision value calculator 290 configured to calculate a block decision value for the block. The block decision value is preferably representative of how smooth pixel values in the first and the second line of pixels in the block and in the corresponding first and the corresponding second line of pixels in the neighboring block are in a direction parallel to the filtering direction. The block decision value calculated by the block decision value calculator 290 is advantageously equal to the first filter decision value calculated by the first decision value calculator 210. In such a case, the block decision value calculator 290 could be omitted and its operation is instead taken over by the first decision value calculator 210. However, it is possible to have both these units 210, 290 implemented in the filtering control device 200 and in particular for those embodiments where the block-specific decision value is not necessarily equal to the first filter decision value.

In either case, the block-specific decision value calculated by the block decision value calculator 290 or coming from the first decision value calculator 210 is processed by a block threshold comparator 292. The block threshold comparator 292 in particular compares the block-specific decision value to a block-specific threshold. A filtering selector 294 is then implemented in the filtering control device 200 to select whether to apply de-blocking filter to the current block and the relevant block boundary or not based on the comparison conducted by the block threshold comparator 292. The filtering selector 294 preferably selects to apply de-blocking filtering to the block if the block-specific decision value is below the block-specific threshold as determined by the block threshold comparator 292. If the block-specific decision value is not below the block-specific threshold the filtering selector 294 prevents any deblocking filtering for the current block and the current block boundary.

The threshold determiner 280 previously discussed preferably also determines the block-specific threshold employed by the block threshold comparator 292. The threshold determiner 280 preferably determines the block-specific threshold based on the quantization parameter of the block and preferably using the threshold look-up table 285 with the quantization parameter as table input.

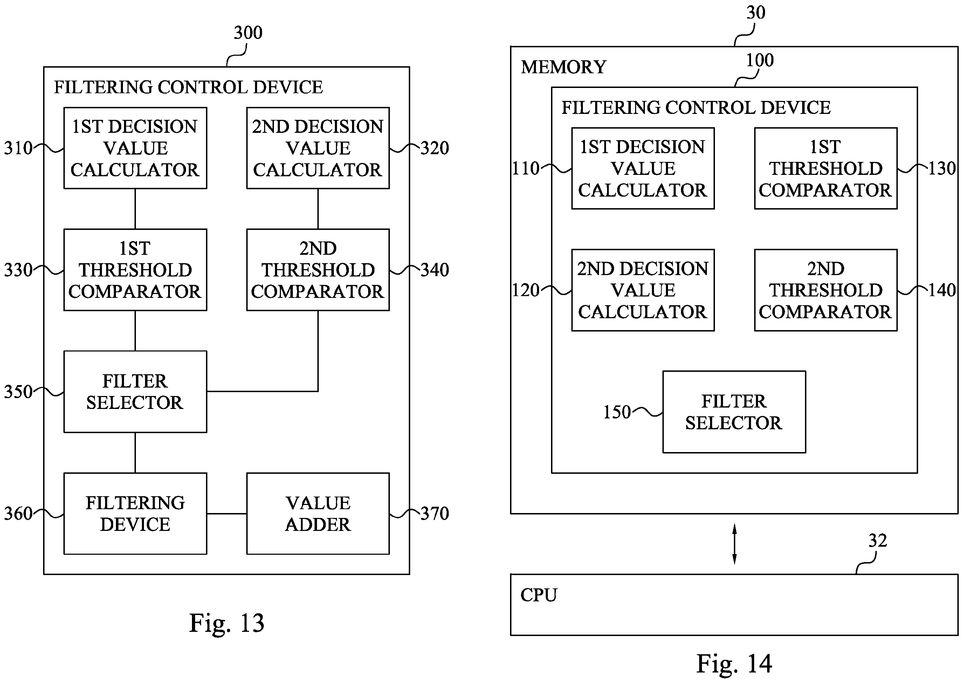

Fig. 13 is a schematic block diagram of yet another embodiment of a filtering control device 300. The operations of the first and second decision value calculators 310, 320, the first and second threshold comparators 330, 340 and the filter selector 350 are preferably conducted as previously described above in connection with Figs. 11 and 12.

In this embodiment, the filtering control device 300 comprises a filtering device configured to filter pixel values in the current line of pixels with a de-blocking filter selected by the filter selector. The filtering device 360 can be configured to apply any of the previously described and discussed strong or weak de-blocking filters.

In a particular embodiment, the filtering device 360, when the filter selector 350 indicates selection of weak de-blocking filtering, filter pixel values in the current line of pixels with a weak de-blocking filter having filter taps [2 4 1 1]/8 to get a delta value. A value adder 370 is in this embodiment implemented in the filtering control device 300 to add the delta value to the pixel value of a pixel closest to, in the current line of pixels, the block boundary.

The embodiments described above and illustrated in Figs. 11 to 13 can be combined. Thus, the filtering device and value adder of Fig. 13 can be implemented in the filtering control device of Figs. 11 or 12. Additionally, the third decision value calculator and third threshold comparator of Fig. 12 can be implemented in the embodiments of Figs. 11 or 13. Alternatively, or in addition the block decision value calculator, the block threshold comparator and the filtering selector could be provided in the embodiments of Fig. 11 or 13 as could the threshold determiner and the threshold look-up table.

Any of the embodiments of the filtering control device could be implemented at least partly in software. Fig. 14 is a schematic block diagram of the filtering control device 100 implemented as a computer program product stored on a memory 26 and loaded and run on a general purpose or specially adapted computer, processor or microprocessor, represented by a central processing unit (CPU) 32 in the figure.

The software includes computer program code elements or software code portions effectuating the operation of at least the first decision value calculator 110, the second decision value calculator 120, the first threshold comparator 130, the second threshold comparator 140 and the filter selector 150. The units or devices as illustrated in Figs. 12 and 13 may also be implemented as computer program code elements stored in the memory 30 and executed by the CPU 32. The program may be stored in whole or part, on or in one or more suitable volatile computer readable media or data storage means, such as RAM, or one or more non-volatile computer readable media or data storage means, such as magnetic disks, CD-ROMs, DVD disks, hard discs, in ROM or flash memory. The data storage means can be a local data storage means or is remotely provided, such as in a data server. The software may thus be loaded into the operating memory of a computer or equivalent processing system for execution by a processor. The computer/processor does not have to be dedicated to only execute the above-described functions but may also execute other software tasks. A non-limiting example of program code used to define the filtering control device 100 include single instruction multiple data (SIMD) code.

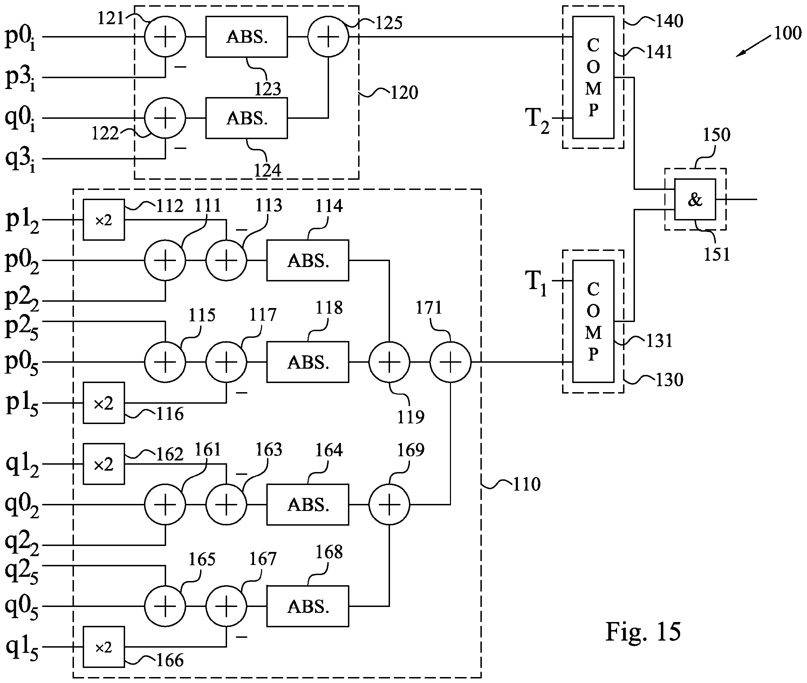

Fig. 15 is an illustration of a hardware implementation of a filtering control device according to an embodiment. In this embodiment, the second decision value calculator 120 is implemented as three adders 121, 122, 125 and two absolute value calculators 123, 124. A first adder 121 receives the pixel value of the pixel in the current line of pixels closest to the block boundary and the negated pixel value of the pixel in the current line third closest to the block boundary. A second adder 122 correspondingly receives the pixel value of the pixel in the corresponding current line of pixels closest to the block boundary and the negated pixel value of the pixel in the corresponding current line third closest to the block boundary. The output from the first adder 121 is brought to a first absolute value calculator 123 that provides a positive value. A second absolute value calculator 124 correspondingly provides a positive value of the output from the second adder 122. The third adder 125 then sums the positive values from the two absolute value calculators 123, 124 to get the second filter decision value.

The first filter decision value calculator 110 comprises, in this embodiment, a first adder 111 that adds the pixel values of the pixel closest to and second next closest to the block boundary in the first line of pixels. The pixel value of the pixel next closest to the block boundary in the first line is multiplied by two in a multiplier 112 and the output from the multiplier 112 is negated and is input to a second adder 113 which also receives the output from the first adder. A first absolute value calculator 114 generates a positive value of the adder output.

A corresponding pair of adders 115, 117, a multiplier 116 and an absolute value calculator 118 operates on the pixel values in the second line of pixels in the current block. The outputs from the first absolute value calculator 114 and the second absolute value calculator 118 are summed by an adder 119.

A corresponding set of adders 161, 163, 165, 167, 169, multipliers 162, 166 and absolute value calculators 164,168 are interconnected and configured to operate on pixel values of pixels in the corresponding first and second lines of pixels in the neighboring block. Finally, an adder 171 sums the output from the circuitry processing pixel values of the first and second lines in the block and the output from the circuitry processing pixel values of the corresponding first and second lines in the neighboring block.

The first threshold comparator 130 is implemented as a comparator 131 that receives the output from the adder 171 and the value of the first threshold. The comparator 131 outputs $1_{bin}$ if the adder output is below the first threshold and otherwise outputs $0_{bin}$. The second threshold comparator 140 is also implemented as a comparator 141 that receives the output from the adder 125 of the second decision value calculator 120 and the second threshold. The comparator 141 outputs $1_{bin}$ if the adder output is below the first threshold and otherwise outputs $0_{bin}$.

The outputs from the two comparators 131,141 are input to an AND gate 151, which corresponds to the filter selector 150. If both the comparator outputs are $1_{bin}$, the AND gate 151 outputs $1_{bin}$, indicating that strong deblocking filtering is to be applied to pixel values in the current line of pixels in the block. Otherwise the AND gate 151 outputs $0_{bin}$ and weak de-blocking filtering will instead be applied to the pixel values.

The hardware implementation of the filtering control device 100 illustrated in Fig. 15 should merely be seen as an illustrative example of how the units 110, 120, 130, 140, 150 of the filtering control device 100 can be implemented in hardware. There are numerous variants of circuitry elements that can be used and combined to achieve the same or corresponding functions as the circuitry elements illustrated in the figure. Also such variants are encompassed by the embodiments. Particular examples of hardware implementation of the filtering control device 100 is implementation in digital signal processor (DSP) hardware and integrated circuit technology, including both general-purpose electronic circuitry and application-specific circuitry.

Fig. 13 is a schematic block diagram of an encoder 40 for encoding a block of pixels in a video frame of a video sequence according to an embodiment.

A current block of pixels is predicted by performing a motion estimation by a motion estimator 50 from an already provided block of pixels in the same frame or in a previous frame. The result of the motion estimation is a motion or displacement vector associated with the reference block, in the case of inter prediction. The motion vector is utilized by a motion compensator 50 for outputting an inter prediction of the block of pixels.

An intra predictor 49 computes an intra prediction of the current block of pixels. The outputs from the motion estimator/compensator 50 and the intra predictor 49 are input in a selector 51 that either selects intra prediction or inter prediction for the current block of pixels. The output from the selector 51 is input to an error calculator in the form of an adder 41 that also receives the pixel values of the current block of pixels. The adder 41 calculates and outputs a residual error as the difference in pixel values between the block of pixels and its prediction.

The error is transformed in a transformer 42, such as by a discrete cosine transform, and quantized by a quantizer 43 followed by coding in an encoder 44, such as by entropy encoder. In inter coding, also the estimated motion vector is brought to the encoder 44 for generating the coded representation of the current block of pixels.

The transformed and quantized residual error for the current block of pixels is also provided to a inverse quantizer 45 and inverse transformer 46 to retrieve the original residual error. This error is added by an adder 47 to the block prediction output from the motion compensator 50 or the intra predictor 49 to create a reference block of pixels that can be used in the prediction and coding of a next block of pixels. This new reference block is first processed by a filtering control device 100 according to the embodiments in order to determine whether de-blocking filtering will be applied and in such a case what type of de-blocking filter to use. The processed new reference block is then temporarily stored in a frame buffer 48, where it is available to the intra predictor 49 and the motion estimator/compensator 50.

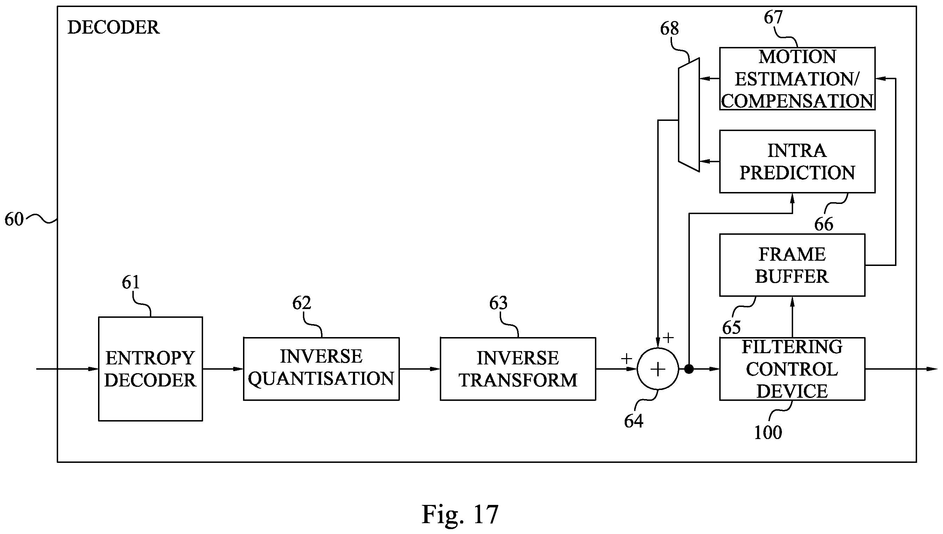

Fig. 17 is a corresponding schematic block diagram of a decoder 60 comprising a filtering control device 100 according to the embodiments. The decoder 60 comprises a decoder 61, such as entropy decoder, for decoding an encoded representation of a block of pixels to get a set of quantized and transformed residual errors. These residual errors are dequantized in an inverse quantizer 62 and inverse transformed by an inverse transformer 63 to get a set of residual errors.

These residual errors are added in an adder 64 to the pixel values of a reference block of pixels. The reference block is determined by a motion estimator/compensator 67 or intra predictor 66, depending on whether inter or intra prediction is performed. A selector 68 is thereby interconnected to the adder 64 and the motion estimator/compensator 67 and the intra predictor 66. The resulting decoded block of pixels output form the adder 64 is input to a filtering control device 100 according to the embodiments in order to deblocking filter any blocking artifacts. The filtered block of pixels is output form the decoder 60 and is furthermore preferably temporarily provided to a frame buffer 65 and can be used as a reference block of pixels for a subsequent block of pixels to be decoded. The frame buffer 65 is thereby connected to the motion estimator/compensator 67 to make the stored blocks of pixels available to the motion estimator/compensator 67.

The output from the adder 64 is preferably also input to the intra predictor 66 to be used as an unfiltered reference block of pixels.

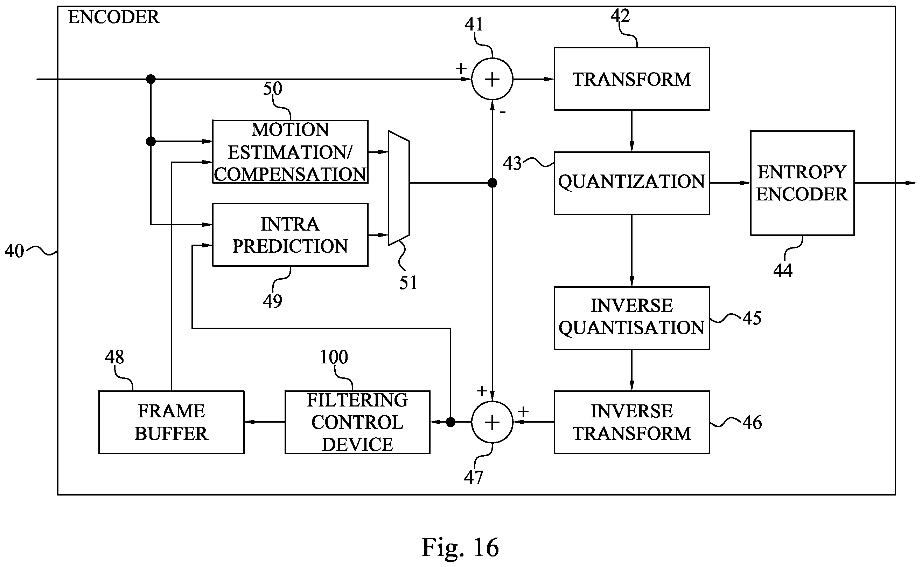

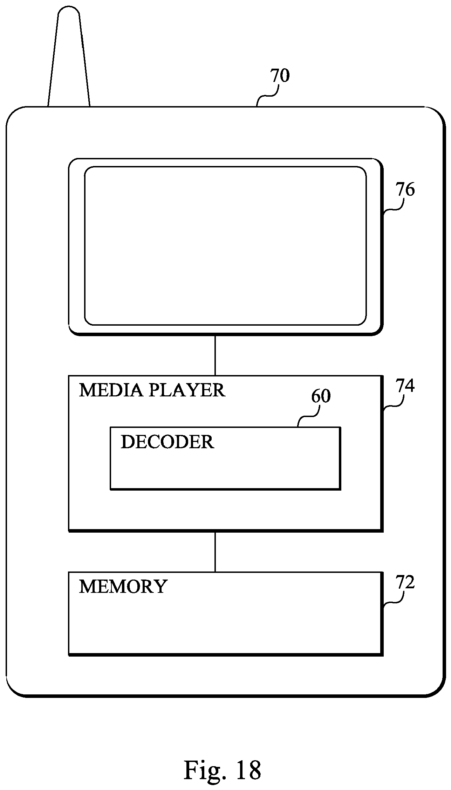

Fig. 18 is a schematic block diagram of a media terminal 70 housing a decoder 60 with a filtering control device. The media terminal 70 can be any device having media decoding functions that operates on an encoded video stream of encoded video frames to thereby decode the video frames and make the video data available. Non-limiting examples of such devices include mobile telephones and other portable media players, computers, decoders, game consoles, etc. The media terminal 70 comprises a memory 72 configured to store encoded video frames. These encoded video frames can have been generated by the media terminal 70 itself. In such a case, the media terminal 70 preferably comprises a media engine or recorder together with a connected encoder, such as the encoder of Fig. 16. Alternatively, the encoded video frames are generated by some other device and wirelessly transmitted or transmitted by wire to the media terminal 70. The media terminal 70 then comprises a transceiver (transmitter and receiver) or input and output port to achieve the data transfer.

The encoded video frames are brought from the memory 72 to a decoder 60, such as the decoder illustrated in Fig. 17. The decoder 60 then decodes the encoded video frames into decoded video frames. The decoded video frames are provided to a media player 74 that is configured to render the decoded video frames into video data that is displayable on a display or screen 76 of or connected to the media terminal 70.

In Fig. 18, the media terminal has been illustrated as comprising both the decoder 60 and the media player 74, with the decoder 60 implemented as a part of the media player 74. This should, however, merely be seen as an illustrative but non-limiting example of an implementation embodiment for the media terminal 70. Also distributed implementations are possible where the decoder 60 and the media player 74 are provided in two physically separated devices are possible and within the scope of media terminal 70 as used herein. The display 76 could also be provided as a separate device connected to the media terminal 70, where the actual data processing is taking place.

## Claims

**1.** A filtering control method applicable to a block (10) of multiple pixels (11, 13, 15, 17) in a video frame, each pixel (11, 13, 15, 17) having a respective pixel value, said method comprising:

calculating (S1) a first filter decision value for said block (10) based on

$$\left|p2_j - 2p1_j + p0_j\right| + \left|q2_j - 2q1_j + q0_j\right|$$

where $p0_j$ denotes a pixel value of a pixel closest to, in a first line of pixels in said block (10), a block boundary (1) to a neighboring block (20), $p1_j$ denotes a pixel value of a pixel next closest to, in said first line of pixels, said block boundary (1), $p2_j$ denotes a pixel value of a pixel second next closest to, in said first line of pixels, said block boundary (1), $q0_j$ denotes a pixel value of a pixel in said neighboring block (20) closest to, in a corresponding first line of pixels in said neighboring block (20), said block boundary (1), $q1_j$ denotes a pixel value of a pixel of said neighboring block (20) next closest to, in said corresponding first line of pixels, said block boundary (1) and $q2_j$ denotes a pixel value of a pixel in said neighboring block (20) second next closest to, in said corresponding first line of pixels, said block boundary (1);

calculating (S2) a second filter decision value for said block (10) as

$$\left|p3_i - p0_i\right| + \left|q0_i - q3_i\right|$$

where $p0_i$ denotes a pixel value of a pixel (11) closest to, in a current line (12) of pixels (11, 13, 15, 17), said block boundary (1), $p3_i$ denotes a pixel value of a pixel (17) third next closest to, in said current line (12) of pixels (11, 13, 15, 17), said block boundary (1), $q0_i$ denotes a pixel value of a pixel (21) in said neighboring block (20) closest to, in a corresponding current line (22) of pixels (21,23,25,27), said block boundary (1) and $q3_i$ denotes a pixel value of a pixel (27) in said neighboring block (20) third next closest to, in said corresponding current line (22) of pixels (21, 23, 25, 27), said block boundary (1);

calculating (S10) a third filter decision value for said block (10) as

$$\left|p0_i - q0_i\right|;$$

comparing (S11) said first filter decision value with a first threshold, said second filter decision value with a second threshold and said third filter decision value with a third threshold;

selecting (S4) a strong de-blocking filter to filter at least one pixel value in said current line (12) of pixels (11, 13, 15, 17) if said first filter decision value is below said first threshold, said second filter decision value is below said second threshold and said third filter decision value is below said third threshold and otherwise selecting (S5) a weak de-blocking filter to filter at least one pixel value in said current line (12) of pixels (11, 13, 15, 17), wherein said strong de-blocking filter has a comparatively higher filtering strength as compared to said weak de-blocking filter.

2. The method according to claim 1, further comprising determining (S20) said third threshold based on a quantization parameter selected for residual coding of said block (10).

3. The method according to claim 2, wherein determining (S20) said third threshold comprises determining (S20) said third threshold as $(t_c \times 5 + 1) >> 1$, where $t_c$ is a clipping threshold selected for said block (10) based on said quantization parameter and X>>Y denotes right shift of X by $2^Y$, i.e. $X/2^Y$.

4. The method according to any of the claims 1 to 3, further comprising determining said second threshold to be equal to half said first threshold.

5. The method according to any of the claims 1 to 4, further comprising determining (S30) said first threshold and said second threshold based on a quantization parameter selected for residual coding of said block.

6. The method according to claim 5, wherein determining (S30) said first threshold and said second threshold comprises determining (S30) said first threshold as β>>2 and said second threshold as β>>3, wherein the parameter β is determined based on said quantization parameter and X>>Y denotes right shift of X by $2^Y$, i.e. $X/2^Y$.

7. The method according to any of the claims 1 to 6, further comprising:

calculating another second filter decision value for said block (10) as

$$\left|p3_j - p0_j\right| + \left|q0_j - q3_j\right|$$

where $p0_j$ denotes a pixel value of a pixel closest to, in another line of pixels in said block (10), said block boundary (1), $p3_j$ denotes a pixel value of a pixel third next closest to, in said another line of pixels, said block boundary (1), $q0_j$ denotes a pixel value of a pixel in said neighboring block (20) closest to, in a corresponding another line of pixels, said block boundary (1) and $q3_j$ denotes a pixel value of a pixel in said neighboring block (20) third next closest to, in said corresponding another line of pixels, said block boundary (1);
comparing said first filter decision value with said first threshold and said another second filter decision value with said second threshold; and
selecting said strong de-blocking filter to filter at least one pixel value in said another line of pixels if said first filter decision value is below said first threshold and said another second filter decision value is below said second threshold and otherwise selecting said weak de-blocking filter to filter at least one pixel value in said another line of pixels.

8. A filtering control device (200) comprising:

a first decision value calculator (210) configured to calculate a first filter decision value for a block (10) of multiple pixels (11, 13, 15, 17) in a video frame, each pixel (11, 13, 15, 17) having a respective pixel value, said first filter decision value is based on

$$\left|p2_j - 2p1_j + p0_j\right| + \left|q2_j - 2q1_j + q0_j\right|$$

where $p0_j$ denotes a pixel value of a pixel closest to, in a first line of pixels in said block (10), a block boundary (1) to a neighboring block (20), $p1_j$ denotes a pixel value of a pixel next closest to, in said first line of pixels, said block boundary (1), $p2_j$ denotes a pixel value of a pixel second next closest to, in said first line of pixels, said block boundary (1), $q0_j$ denotes a pixel value of a pixel in said neighboring block (20) closest to, in a corresponding first line of pixels in said neighboring block (20), said block boundary (1), $q1_j$ denotes a pixel value of a pixel of said neighboring block (20) next closest to, in said corresponding first line of pixels, said block boundary (1) and $q2_j$ denotes a pixel value of a pixel in said neighboring block (20) second next closest to, in said corresponding first line of pixels, said block boundary (1);
a second decision value calculator (220) configured to calculate a second filter decision value for said block (10) as

$$|p3_i - p0_i| + |q0_i - q3_i|$$

where $p0_i$ denotes a pixel value of a pixel (11) closest to, in a current line (12) of pixels (11, 13, 15, 17), said block boundary (1), $p3_i$ denotes a pixel value of a pixel (17) third next closest to, in said current line (12) of pixels (11, 13, 15, 17), said block boundary (1), $q0_i$ denotes a pixel value of a pixel (21) in said neighboring block (20) closest to, in a corresponding current line (22) of pixels (21,23,25,27), said block boundary (1) and $q3_i$ denotes a pixel value of a pixel (27) in said neighboring block (20) third next closest to, in said corresponding current line (22) of pixels (21, 23, 25, 27), said block boundary (1);
a third decision value calculator (260) configured to calculate a third filter decision value for said block (10) a third filter decision value for said block (10) as

$$|p0_i - q0_i|;$$

a first threshold comparator (230) configured to compare said first filter decision value calculated by said first decision value calculator (210) to a first threshold;
a second threshold comparator (240) configured to compare said second filter decision value calculated by said second decision value calculator (220) to a second threshold;
a third threshold comparator (270) configured to compare said third filter decision value calculated by said third decision value calculator (260) with a third threshold; and
a filter selector (250) configured to select a strong de-blocking filter to filter at least one pixel value in said current line (12) of pixels (11,13,15,17) if said first filter decision value is below said first threshold as determined by said first filter threshold comparator (230), said second filter decision value is below said second threshold as determined by said second threshold comparator (240) and said third filter decision value is below said third threshold as determined by said third threshold value comparator (270) and otherwise select a weak de-blocking filter to filter at least one pixel value in said current line (12) of pixels (11, 13, 15, 17), wherein said strong de-blocking filter has a comparatively higher filtering strength as compared to said weak de-blocking filter.

**9.** The device according to claim 8, further comprising a threshold determiner (280) configured to determine said third threshold based on a quantization parameter selected for residual coding of said block (10).

**10.** The device according to claim 9, wherein said threshold determiner (280) is configured to determine said third threshold as $(t_c \times 5+1)>>1$, where $t_c$ is a clipping threshold selected for said block (10) based on said quantization parameter and X>>Y denotes right shift of X by $2^Y$, i.e. $X/2^Y$.

**11.** The device according to any of the claims 8 to 10, further comprising a threshold determiner (280) configured to determine said second threshold to be equal to half said first threshold.

**12.** The device according to any of the claims 8 to 11, further comprising a threshold determiner (280) configured to determine said first threshold and said second threshold based on a quantization parameter selected for residual coding of said block (10).

**13.** The device according to claim 12, wherein said threshold determiner (280) is configured to determine said first threshold as $\beta>>2$ and said second threshold as $\beta>>3$, wherein the parameter $\beta$ is determined based on said quantization parameter and X>>Y denotes right shift of X by $2^Y$, i.e. $X/2^Y$.

**14.** The device according to any of the claims 8 to 12, wherein:

said second decision value calculator (220) is configured to calculate another second filter decision value for said block (10) as

$$|p3_j - p0_j| + |q0_j - q3_j|$$

where $p0_j$ denotes a pixel value of a pixel closest to, in another line of pixels in said block (10), said block boundary (1), $p3_j$ denotes a pixel value of a pixel third next closest to, in said another line of pixels, said block

boundary (1), $q0_j$ denotes a pixel value of a pixel in said neighboring block (20) closest to, in a corresponding another line of pixels, said block boundary (1) and $q3_j$ denotes a pixel value of a pixel in said neighboring block (20) third next closest to, in said corresponding another line of pixels, said block boundary (1);
said second threshold comparator (240) is configured to compare said another second filter decision value calculated by said second decision value calculator (220) to said second threshold; and
said filter selector (250) is configured to select said strong de-blocking filter to filter at least one pixel value in said another line of pixels if said first filter decision value is below said first threshold as determined by said first threshold comparator (210) and said another second filter decision value is below said second threshold as determined by said second threshold comparator (220) and otherwise select said weak de-blocking filter to filter at least one pixel value in said another line of pixels.

**15.** An encoder (40) comprising a filtering control device (200) according to any of the claims 8 to 14

**16.** A decoder (60) comprising a filtering control device (200) according to any of the claims 8 to 14.

**17.** A media terminal (70) comprising:

a memory (72) configured to store encoded video frames;
a decoder (60) according to claim 16 configured to decode said encoded video frames into decoded video frames; and
a media player (74) configured to render said decoded video frames into video data displayable on a display (76).

**Patentansprüche**

**1.** Verfahren zur Filtersteuerung, das auf einen Block (10) aus mehreren Bildpunkten (11, 13, 15, 17) in einem Videoeinzelbild anwendbar ist, wobei jeder Bildpunkt (11, 13, 15, 17) einen entsprechenden Bildpunktwert aufweist, wobei das Verfahren umfasst:

Berechnen (S1) eines ersten Filterentscheidungswerts für den Block (10) auf Grundlage von

$$\left|p2_j - 2p1_j + p0_j\right| + \left|q2_j - 2q1_j + q0_j\right|$$

wobei $p0_j$ für einen Bildpunktwert eines Bildpunkts steht, der sich in einer ersten Zeile von Bildpunkten in dem Block (10) direkt an einer Blockgrenze (1) zu einem benachbarten Block (20) befindet, $p1_j$ für einen Bildpunktwert eines Bildpunkts steht, der sich in der ersten Zeile von Bildpunkten in dem Block als Nächstes direkt an der Blockgrenze (1) befindet, $p2_j$ für einen Bildpunktwert eines Bildpunkts steht, der sich in der ersten Zeile von Bildpunkten in dem Block als Zweitnächstes direkt an der Blockgrenze (1) befindet, $q0_j$ für einen Bildpunktwert eines Bildpunkts in dem benachbarten Block (20) steht, der sich in einer entsprechenden ersten Zeile von Bildpunkten in dem benachbarten Block (20) direkt an der Blockgrenze (1) befindet, $q1_j$ für einen Bildpunktwert eines Bildpunkts in dem benachbarten Block (20) steht, der sich in der entsprechenden Zeile von Bildpunkten als Nächstes direkt an der Blockgrenze (1) befindet, und $q2_j$ für einen Bildpunktwert eines Bildpunkts in dem benachbarten Block (20) steht, der sich in der ersten Zeile von Bildpunkten als Zweitnächstes direkt an der Blockgrenze (1) befindet;
Berechnen (S2) eines zweiten Filterentscheidungswerts für den Block (10) als

$$\left|p3_i - p0_i\right| + \left|q0_i - q3_i\right|$$

wobei $p0_i$ für einen Bildpunktwert eines Bildpunkts (11) steht, der sich in einer aktuellen Zeile (12) von Bildpunkten (11, 13, 15, 17) direkt an der Blockgrenze (1) befindet, $p3_i$ für einen Bildpunktwert eines Bildpunkts (17) steht, der sich in der aktuellen Zeile (12) von Bildpunkten (11, 13, 15, 17) als Drittnächstes direkt an der Blockgrenze (1) befindet, $q0_i$ für einen Bildpunktwert eines Bildpunkts (21) in dem benachbarten Block (20) steht, der sich in einer entsprechenden aktuellen Zeile (22) von Bildpunkten (21 ,23, 25, 27) direkt an der Blockgrenze (1) befindet, und $q3_i$ für einen Bildpunktwert eines Bildpunkts (27) in dem benachbarten Block (20) steht, der sich in der entsprechenden aktuellen Zeile (22) von Bildpunkten (21, 23, 25, 27) als Drittnächstes direkt an der Blockgrenze (1) befindet; Berechnen (S10) eines dritten Filterentscheidungswerts für den Block (10) als

$$\left|p0_i - q0_i\right|;$$

Vergleichen (S11) des ersten Filterentscheidungswerts mit einem ersten Schwellenwert, des zweiten Filterentscheidungswerts mit einem zweiten Schwellenwert und des dritten Filterentscheidungswerts mit einem dritten Schwellenwert;
Auswählen (S4) eines starken Deblockierungsfilters zum Filtern mindestens eines Bildpunktwerts in der aktuellen Zeile (12) von Bildpunkten (11, 13, 15, 17), wenn der erste Filterentscheidungswert unter dem ersten Schwellenwert liegt, der zweite Filterentscheidungswert unter dem zweiten Schwellenwert liegt und der dritte Filterentscheidungswert unter dem dritten Schwellenwert liegt, und andernfalls Auswählen (S5) eines schwachen Deblockierungsfilters zum Filtern mindestens eines Bildpunktwerts in der aktuellen Zeile (12) von Bildpunkten (11, 13, 15, 17), wobei der starke Deblockierungsfilter eine vergleichsweise höhere Filterstärke aufweist als der schwache Deblockierungsfilter.

2. Verfahren nach Anspruch 1, ferner umfassend das Bestimmen (S20) des dritten Schwellenwerts auf Grundlage eines Quantifizierungsparameters, der zur Restcodierung des Blocks (10) ausgewählt ist.

3. Verfahren nach Anspruch 2, wobei das Bestimmen (S20) des dritten Schwellenwerts das Bestimmen (S20) des dritten Schwellenwerts als ($t_c$ x 5+1)>>1 umfasst, wobei $t_c$ ein Clipping-Schwellenwert ist, der für den Block (10) auf Grundlage des Quantifizierungsparameters ausgewählt ist, und X>>Y für eine Rechtsverschiebung von X um $2^Y$, d. h. $X/2^Y$, steht.

4. Verfahren nach einem der Ansprüche 1 bis 3, ferner umfassend das Bestimmen, dass der zweite Schwellenwert der Hälfte des ersten Schwellenwerts entspricht.

5. Verfahren nach einem der Ansprüche 1 bis 4, ferner umfassend das Bestimmen (S30) des ersten Schwellenwerts und des zweiten Schwellenwerts auf Grundlage eines Quantifizierungsparameters, der zur Restcodierung des Blocks ausgewählt ist.

6. Verfahren nach Anspruch 5, wobei das Bestimmen (S30) des ersten Schwellenwerts und zweiten Schwellenwerts das Bestimmen (S30) des ersten Schwellenwerts als β>>2 und des zweiten Schwellenwerts als β>>3 umfasst, wobei der Parameter β auf Grundlage des Quantifizierungsparameters bestimmt wird und X>>Y für eine Rechtsverschiebung von X um $2^Y$, d. h. $X/2^Y$, steht.

7. Verfahren nach einem der Ansprüche 1 bis 6, ferner umfassend: Berechnen eines weiteren zweiten Filterentscheidungswerts für den Block (10) als

$$\left|p3_j - p0_j\right| + \left|q0_j - q3_j\right|$$

wobei $p0_j$ für einen Bildpunktwert eines Bildpunkts steht, der sich in einer weiteren Zeile von Bildpunkten in dem Block (10) direkt an der Blockgrenze (1) befindet, $p3_j$ für einen Bildpunktwert eines Bildpunkts steht, der sich in der weiteren Zeile von Bildpunkten als Drittnächstes direkt an der Blockgrenze (1) befindet, $q0_j$ für einen Bildpunktwert eines Bildpunkts in dem benachbarten Block (20) steht, der sich in einer entsprechenden weiteren Zeile von Bildpunkten direkt an der Blockgrenze (1) befindet, und $q3_j$ für einen Bildpunktwert eines Bildpunkts in dem benachbarten Block (20) steht, der sich in der entsprechenden weiteren Zeile von Bildpunkten als Drittnächstes direkt an der Blockgrenze (1) befindet;
Vergleichen des ersten Filterentscheidungswerts mit dem ersten Schwellenwert und des weiteren zweiten Filterentscheidungswerts mit dem zweiten Schwellenwert; und
Auswählen des starken Deblockierungsfilters zum Filtern mindestens eines Bildpunktwerts in der weiteren Zeile von Bildpunkten, wenn der erste Filterentscheidungswert unter dem ersten Schwellenwert liegt und der weitere zweite Filterentscheidungswert unter dem zweiten Schwellenwert liegt, und andernfalls Auswählen des schwachen Deblockierungsfilters zum Filtern mindestens eines Bildpunktwerts in der weiteren Zeile von Bildpunkten.

**8.** Filtersteuervorrichtung (200), umfassend:

eine erste Entscheidungswertberechnungseinrichtung (210), die dazu konfiguriert ist, einen ersten Filterentscheidungswert für einen Block (10) aus mehreren Bildpunkten (11, 13, 15, 17) in einem Videoeinzelbild zu berechnen, wobei jeder Bildpunkt (11, 13, 15, 17) einen entsprechenden Bildpunktwert aufweist, wobei der erste Filterentscheidungswert auf Folgendem basiert:

$$\left|p2_j - 2p1_j + p0_j\right| + \left|q2_j - 2q1_j + q0_j\right|$$

wobei $p0_j$ für einen Bildpunktwert eines Bildpunkts steht, der sich in einer ersten Zeile von Bildpunkten in dem Block (10) direkt an einer Blockgrenze (1) zu einem benachbarten Block (20) befindet, $p1_j$ für einen Bildpunktwert eines Bildpunkts steht, der sich in der ersten Zeile von Bildpunkten als Nächstes direkt an der Blockgrenze (1) befindet, $p2_j$ für einen Bildpunktwert eines Bildpunkts steht, der sich in der ersten Zeile von Bildpunkten als Zweitnächstes direkt an der Blockgrenze (1) befindet, $q0_j$ für einen Bildpunktwert eines Bildpunkts in dem benachbarten Block (20) steht, der sich in einer entsprechenden ersten Zeile von Bildpunkten in dem benachbarten Block (20) direkt an der Blockgrenze (1) befindet, $q1_j$ für einen Bildpunktwert eines Bildpunkts in dem benachbarten Block (20) steht, der sich in der entsprechenden Zeile von Bildpunkten als Nächstes direkt an der Blockgrenze (1) befindet, und $q2_j$ für einen Bildpunktwert eines Bildpunkts in dem benachbarten Block (20) steht, der sich in der ersten Zeile von Bildpunkten als Zweitnächstes direkt an der Blockgrenze (1) befindet;
eine zweite Entscheidungswertberechnungseinrichtung (220), die dazu konfiguriert ist, einen zweiten Filterentscheidungswert für den Block (10) zu berechnen als:

$$\left|p3_i - p0_i\right| + \left|q0_i - q3_i\right|$$

wobei $p0_i$ für einen Bildpunktwert eines Bildpunkts (11) steht, der sich in einer aktuellen Zeile (12) von Bildpunkten (11, 13, 15, 17) direkt an der Blockgrenze (1) befindet, $p3_i$ für einen Bildpunktwert eines Bildpunkts (17) steht, der sich in der aktuellen Zeile (12) von Bildpunkten (11, 13, 15, 17) als Drittnächstes direkt an der Blockgrenze (1) befindet, $q0_i$ für einen Bildpunktwert eines Bildpunkts (21) in dem benachbarten Block (20) steht, der sich in einer entsprechenden aktuellen Zeile (22) von Bildpunkten (21 ,23, 25, 27) direkt an der Blockgrenze (1) befindet, und $q3_i$ für einen Bildpunktwert eines Bildpunkts (27) in dem benachbarten Block (20) steht, der sich in der entsprechenden aktuellen Zeile (22) von Bildpunkten (21, 23, 25, 27) als Drittnächstes direkt an der Blockgrenze (1) befindet;
eine dritte Entscheidungswertberechnungseinrichtung (260), die dazu konfiguriert ist, einen dritten Filterentscheidungswert für den Block (10) zu berechnen als:

$$\left|p0_i - q0_i\right|;$$

eine erste Schwellenwertvergleichseinrichtung (230), die dazu konfiguriert ist, den ersten Filterentscheidungswert, der von der ersten Entscheidungswertberechnungseinrichtung (210) berechnet wurde, mit einem ersten Schwellenwert zu vergleichen;
eine zweite Schwellenwertvergleichseinrichtung (240), die dazu konfiguriert ist, den zweiten Filterentscheidungswert, der von der zweiten Entscheidungswertberechnungseinrichtung (220) berechnet wurde, mit einem zweiten Schwellenwert zu vergleichen;
eine dritte Schwellenwertvergleichseinrichtung (270), die dazu konfiguriert ist, den dritten Filterentscheidungswert, der von der dritten Entscheidungswertberechnungseinrichtung (260) berechnet wurde, mit einem dritten Schwellenwert zu vergleichen; und
eine Filterauswahleinrichtung (250), die dazu konfiguriert ist, einen starken Deblockierungsfilters zum Filtern mindestens eines Bildpunktwerts in der aktuellen Zeile (12) von Bildpunkten (11, 13, 15, 17) auszuwählen, wenn der erste Filterentscheidungswert laut Bestimmung durch die erste Filterschwellenwertvergleichseinrichtung (230) unter dem ersten Schwellenwert liegt, der zweite Filterentscheidungswert laut Bestimmung durch die zweite Schwellenwertvergleichseinrichtung (240) unter dem zweiten Schwellenwert liegt und der dritte Filterentscheidungswert laut Bestimmung durch die dritte Schwellenwertvergleichseinrichtung (270) unter einem dritten Schwellenwert liegt, und andernfalls einen schwachen Deblockierungsfilters zum Filtern mindestens eines Bildpunktwerts in der aktuellen Zeile (12) von Bildpunkten (11, 13, 15, 17) auszuwählen, wobei der starke Deblockierungsfilter eine vergleichsweise höhere Filterstärke aufweist als der schwache Deblockierungsfilter.

**9.** Vorrichtung nach Anspruch 8, ferner umfassend eine Schwellenwertbestimmungseinrichtung (280), die dazu konfiguriert ist, den dritten Schwellenwert auf Grundlage eines Quantifizierungsparameters zu bestimmen, der zur restlichen Codierung des Blocks (10) ausgewählt ist.

**10.** Vorrichtung nach Anspruch 9, wobei die Schwellenwertbestimmungseinrichtung (280) dazu konfiguriert ist, den dritten Schwellenwert als ($t_c$ x 5+1)>>1 zu bestimmen, wobei $t_c$ ein Clipschwellenwert ist, der für den Block (10) auf Grundlage des Quantifizierungsparameters ausgewählt ist und X»Y für eine Rechtsverschiebung von X um $2^Y$, d. h. $X/2^Y$, steht.

**11.** Vorrichtung nach einem der Ansprüche 8 bis 10, ferner umfassend eine Schwellenwertbestimmungsvorrichtung (280), die dazu konfiguriert ist, zu bestimmen, dass der zweite Schwellenwert der Hälfte des ersten Schwellenwerts entspricht.

**12.** Vorrichtung nach einem der Ansprüche 8 bis 11, ferner umfassend eine Schwellenwertbestimmungsvorrichtung (280), die dazu konfiguriert ist, den ersten Schwellenwert und den zweiten Schwellenwert auf Grundlage eines Quantifizierungsparameters zu bestimmen, der zur Restcodierung des Blocks (10) ausgewählt ist.

**13.** Vorrichtung nach Anspruch 12, wobei die Schwellenwertbestimmungseinrichtung (280) dazu konfiguriert ist, den ersten Schwellenwert als β>>2 und den zweiten Schwellenwert als β>>3 zu bestimmen, wobei der Parameter β auf Grundlage des Quantifizierungsparameters bestimmt wird und X>>Y für eine Rechtsverschiebung von X um $2^Y$, d. h. $X/2^Y$, steht.

**14.** Vorrichtung nach einem der Ansprüche 8 bis 12, wobei:

die zweite Entscheidungswertberechnungseinrichtung (220) dazu konfiguriert ist, einen weiteren zweiten Filterentscheidungswert für den Block (10) zu berechnen als:

$$\left|p3_j - p0_j\right| + \left|q0_j - q3_j\right|$$

wobei $p0_j$ für einen Bildpunktwert eines Bildpunkts steht, der sich in einer weiteren Zeile von Bildpunkten in dem Block (10) direkt an der Blockgrenze (1) befindet, $p3_j$ für einen Bildpunktwert eines Bildpunkts steht, der sich in der weiteren Zeile von Bildpunkten als Drittnächstes direkt an der Blockgrenze (1) befindet, $q0_j$ für einen Bildpunktwert eines Bildpunkts in dem benachbarten Block (20) steht, der sich in einer entsprechenden weiteren Zeile von Bildpunkten direkt an der Blockgrenze (1) befindet, und $q3_j$ für einen Bildpunktwert eines Bildpunkts in dem benachbarten Block (20) steht, der sich in der entsprechenden weiteren Zeile von Bildpunkten als Drittnächstes direkt an der Blockgrenze (1) befindet;
wobei die zweite Schwellenwertvergleichseinrichtung (240) dazu konfiguriert ist, den weiteren zweiten Filterentscheidungswert, der von der zweiten Entscheidungswertberechnungseinheit (220) berechnet wurde, mit der zweiten Schwelle zu vergleichen; und
die Filterauswahleinrichtung (250) dazu konfiguriert ist, den starken Deblockierungsfilter zum Filtern mindestens eines Bildpunktwerts in der weiteren Zeile von Bildpunkten auszuwählen, wenn der erste Filterentscheidungswert laut Bestimmung durch die erste Schwellenwertvergleichseinrichtung (210) unter dem ersten Schwellenwert liegt und der zweite Filterentscheidungswert laut Bestimmung durch die zweite Schwellenwertvergleichseinrichtung (240) unter dem zweiten Schwellenwert liegt, und andernfalls den schwachen Deblockierungsfilter zum Filtern mindestens eines Bildpunktwerts in der weiteren Zeile von Bildpunkten auszuwählen.

**15.** Codiereinrichtung (40), umfassend eine Filtersteuervorrichtung (200) nach einem der Ansprüche 8 bis 14.

**16.** Decodiereinrichtung (60), umfassend eine Filtersteuervorrichtung (200) nach einem der Ansprüche 8 bis 14.

**17.** Medienendgerät (70), umfassend:

einen Speicher (72), der dazu konfiguriert ist, codierte Videoeinzelbilder zu speichern;
eine Decodiereinrichtung (60) nach Anspruch 16, die dazu konfiguriert ist, die codierten Videoeinzelbilder in decodierte Videoeinzelbilder zu decodieren; und
eine Medienabspieleinrichtung (74), die dazu konfiguriert ist, die decodierten Videoeinzelbilder in auf einer Anzeige (76) anzeigbare Videodaten zu decodieren.

**Revendications**

1. Procédé de commande de filtrage applicable à un bloc (10) de multiples pixels (11, 13, 15, 17) dans une trame vidéo, chaque pixel (11, 13, 15, 17) présentant une valeur de pixel respective, ledit procédé comportant les étapes ci-dessous consistant à :

calculer (S1) une première valeur de décision de filtre pour ledit bloc (10) sur la base de

$$| p2_j - 2p1_j + p0_j | + | q2_j - 2q1_j + q0_j |$$

où $p0_j$ désigne une valeur de pixel d'un pixel qui est le plus proche de, dans une première ligne de pixels dans ledit bloc (10), une limite de bloc (1) au niveau d'un bloc de voisinage (20), $p1_j$ désigne une valeur de pixel d'un pixel suivant qui est le plus proche de, dans ladite première ligne de pixels, ladite limite de bloc (1), $p2_j$ désigne une valeur de pixel d'un pixel qui est le deuxième pixel suivant le plus proche de, dans ladite première ligne de pixels, ladite limite de bloc (1), $q0_j$ désigne une valeur de pixel d'un pixel dans ledit bloc de voisinage (20) qui est le plus proche de, dans une première ligne de pixels correspondante dans ledit bloc de voisinage (20), ladite limite de bloc (1), $q1_j$ désigne une valeur de pixel d'un pixel dudit bloc de voisinage (20) qui est le pixel suivant le plus proche de, dans ladite première ligne de pixels correspondante, ladite limite de bloc (1) et $q2_j$ désigne une valeur de pixel d'un pixel dans ledit bloc de voisinage (20) qui est le deuxième pixel suivant le plus proche de, dans ladite première ligne de pixels correspondante, ladite limite de bloc (1) ;
calculer (S2) une deuxième valeur de décision de filtre pour ledit bloc (10) comme suit

$$| p3_i - p0_i | + | q0_i - q3_i |$$

où $p0_i$ désigne une valeur de pixel d'un pixel (11) qui est le plus proche de, dans une ligne en cours (12) de pixels (11, 13, 15, 17), ladite limite de bloc (1), $p3_i$ désigne une valeur de pixel d'un pixel (17) qui est le troisième pixel suivant le plus proche de, dans ladite ligne en cours (12) de pixels (11, 13, 15, 17), ladite limite de bloc (1), $q0_i$ désigne une valeur de pixel d'un pixel (21) dans ledit bloc de voisinage (20) qui est le plus proche de, dans une ligne en cours correspondante (22) de pixels (21, 23, 25, 27), ladite limite de bloc (1) et $q3_i$ désigne une valeur de pixel d'un pixel (27) dans ledit bloc de voisinage (20) qui est le troisième pixel suivant le plus proche de, dans ladite ligne en cours correspondante (22) de pixels (21, 23, 25, 27), ladite limite de bloc (1) ;
calculer (S10) une troisième valeur de décision de filtre pour ledit bloc (10) comme suit

$$| p0_i - q0_i | ;$$

comparer (S11) ladite première valeur de décision de filtre à un premier seuil, ladite deuxième valeur de décision de filtre à un deuxième seuil et ladite troisième valeur de décision de filtre à un troisième seuil ;
sélectionner (S4) un filtre de dégroupage fort en vue de filtrer au moins une valeur de pixel dans ladite ligne en cours (12) de pixels (11, 13, 15, 17) si ladite première valeur de décision de filtre est inférieure audit premier seuil, si ladite deuxième valeur de décision de filtre est inférieure audit deuxième seuil et si ladite troisième valeur de décision de filtre est inférieure audit troisième seuil, et sinon sélectionner (S5) un filtre de dégroupage faible en vue de filtrer au moins une valeur de pixel dans ladite ligne en cours (12) de pixels (11, 13, 15, 17), dans lequel ledit filtre de dégroupage fort présente une intensité de filtrage comparativement plus élevée par rapport audit filtre de dégroupage faible.

2. Procédé selon la revendication 1, comportant en outre l'étape consistant à déterminer (S20) ledit troisième seuil sur la base d'un paramètre de quantification sélectionné en vue du codage résiduel dudit bloc (10).

**3.** Procédé selon la revendication 2, dans lequel l'étape de détermination (S20) dudit troisième seuil consiste à déterminer (S20) ledit troisième seuil en tant que ($t_c$ x 5 +1) >> 1, où $t_c$ est un seuil d'écrêtage sélectionné pour ledit bloc (10) sur la base dudit paramètre de quantification et X >> Y désigne un décalage à droite de X par $2^Y$, à savoir $X/2^Y$.

**4.** Procédé selon l'une quelconque des revendications 1 à 3, comportant en outre l'étape consistant à déterminer ledit deuxième seuil comme étant égal à la moitié dudit premier seuil.

**5.** Procédé selon l'une quelconque des revendications 1 à 4, comportant en outre l'étape consistant à déterminer (S30) ledit premier seuil et ledit deuxième seuil sur la base d'un paramètre de quantification sélectionné en vue du codage résiduel dudit bloc.

**6.** Procédé selon la revendication 5, dans lequel l'étape de détermination (S30) dudit premier seuil et dudit deuxième seuil consiste à déterminer (S30) ledit premier seuil en tant que β >> 2 et ledit deuxième seuil en tant que β >> 3, dans lequel le paramètre β est déterminé sur la base dudit paramètre de quantification et X >> Y désigne un décalage à droite de X par $2^Y$, à savoir $X/2^Y$.

**7.** Procédé selon l'une quelconque des revendications 1 à 6, comportant en outre les étapes ci-dessous consistant à :

calculer une autre deuxième valeur de décision de filtre pour ledit bloc (10) comme suit

$$| p3_j - p0_j | + | q0_j - q3_j |$$

où $p0_j$ désigne une valeur de pixel d'un pixel qui est le plus proche de, dans une autre ligne de pixels dans ledit bloc (10), ladite limite de bloc (1), $p3_j$ désigne une valeur de pixel d'un pixel qui est le troisième pixel suivant le plus proche de, dans ladite une autre ligne de pixels, ladite limite de bloc (1), $q0_j$ désigne une valeur de pixel d'un pixel dans ledit bloc de voisinage (20) qui est le plus proche de, dans une autre ligne de pixels correspondante, ladite limite de bloc (1) et $q3_j$ désigne une valeur de pixel d'un pixel dans ledit bloc de voisinage (20) qui est le troisième pixel suivant le plus proche de, dans ladite autre ligne de pixels correspondante, ladite limite de bloc (1) ;
comparer ladite première valeur de décision de filtre à un premier seuil et ladite une autre deuxième valeur de décision de filtre audit deuxième seuil ; et
sélectionner ledit filtre de dégroupage fort en vue de filtrer au moins une valeur de pixel dans ladite une autre ligne de pixels si ladite première valeur de décision de filtre est inférieure audit premier seuil et si ladite une autre deuxième valeur de décision de filtre est inférieure audit deuxième seuil, et sinon sélectionner ledit filtre de dégroupage faible en vue de filtrer au moins une valeur de pixel dans ladite une autre ligne de pixels.

**8.** Dispositif de commande de filtrage (200) comportant :

un premier calculateur de valeur de décision (210) configuré de manière à calculer une première valeur de décision de filtre pour un bloc (10) de multiples pixels (11, 13, 15, 17) dans une trame vidéo, chaque pixel (11, 13, 15, 17) présentant une valeur de pixel respective, ladite première valeur de décision de filtre est basée sur

$$| p2_j - 2p1_j + p0_j | + | q2_j - 2q1_j + q0_j |$$

où $p0_j$ désigne une valeur de pixel d'un pixel qui est le plus proche de, dans une première ligne de pixels dans ledit bloc (10), une limite de bloc (1) au niveau d'un bloc de voisinage (20), $p1_j$ désigne une valeur de pixel d'un pixel suivant qui est le plus proche de, dans ladite première ligne de pixels, ladite limite de bloc (1), $p2_j$ désigne une valeur de pixel d'un pixel qui est le deuxième pixel suivant le plus proche de, dans ladite première ligne de pixels, ladite limite de bloc (1), $q0_j$ désigne une valeur de pixel d'un pixel dans ledit bloc de voisinage (20) qui est le plus proche de, dans une première ligne de pixels correspondante dans ledit bloc de voisinage (20), ladite limite de bloc (1), $q1_j$ désigne une valeur de pixel d'un pixel dudit bloc de voisinage (20) qui est le pixel suivant le plus proche de, dans ladite première ligne de pixels correspondante, ladite limite de bloc (1) et $q2_j$ désigne une valeur de pixel d'un pixel dans ledit bloc de voisinage (20) qui est le deuxième pixel suivant le plus proche de, dans ladite première ligne de pixels correspondante, ladite limite de bloc (1) ;
un deuxième calculateur de valeur de décision (220) configuré de manière à calculer une deuxième valeur de décision de filtre pour ledit bloc (10) comme suit

$$| p3_i - p0_i | + | q0_i - q3_i |$$

où $p0_i$ désigne une valeur de pixel d'un pixel (11) qui est le plus proche de, dans une ligne en cours (12) de pixels (11, 13, 15, 17), ladite limite de bloc (1), $p3_i$ désigne une valeur de pixel d'un pixel (17) qui est le troisième pixel suivant le plus proche de, dans ladite ligne en cours (12) de pixels (11, 13, 15, 17), ladite limite de bloc (1), $q0_i$ désigne une valeur de pixel d'un pixel (21) dans ledit bloc de voisinage (20) qui est le plus proche de, dans une ligne en cours correspondante (22) de pixels (21, 23, 25, 27), ladite limite de bloc (1), et $q3_i$ désigne une valeur de pixel d'un pixel (27) dans ledit bloc de voisinage (20) qui est le troisième pixel suivant le plus proche de, dans ladite ligne en cours correspondante (22) de pixels (21, 23, 25, 27), ladite limite de bloc (1) ;
un troisième calculateur de valeur de décision (260) configuré de manière à calculer une troisième valeur de décision de filtre pour ledit bloc (10) comme suit

$$| p0_i - q0_i | ;$$

un premier comparateur de seuil (230) configuré de manière à comparer ladite première valeur de décision de filtre calculée par ledit premier calculateur de valeur de décision (210) à un premier seuil ;
un deuxième comparateur de seuil (240) configuré de manière à comparer ladite deuxième valeur de décision de filtre calculée par ledit deuxième calculateur de valeur de décision (220) à un deuxième seuil ;
un troisième comparateur de seuil (270) configuré de manière à comparer ladite troisième valeur de décision de filtre calculée par ledit troisième calculateur de valeur de décision (260) à un troisième seuil ; et
un sélecteur de filtre (250) configuré de manière à sélectionner un filtre de dégroupage fort en vue de filtrer au moins une valeur de pixel dans ladite ligne en cours (12) de pixels (11, 13, 15, 17), si ladite première valeur de décision de filtre est inférieure audit premier seuil tel que déterminé par ledit premier comparateur de seuil de filtre (230), si ladite deuxième valeur de décision de filtre est inférieure audit deuxième seuil tel que déterminé par ledit deuxième comparateur de seuil (240) et si ladite troisième valeur de décision de filtre est inférieure audit troisième seuil tel que déterminé par ledit troisième comparateur de valeur de seuil (270), et sinon, à sélectionner un filtre de dégroupage faible en vue de filtrer au moins une valeur de pixel dans ladite ligne en cours (12) de pixels (11, 13, 15, 17), dans lequel ledit filtre de dégroupage fort présente une intensité de filtrage comparativement plus élevée par rapport audit filtre de dégroupage faible.

**9.** Dispositif selon la revendication 8, comportant en outre un module de détermination de seuil (280) configuré de manière à déterminer ledit troisième seuil sur la base d'un paramètre de quantification sélectionné en vue du codage résiduel dudit bloc (10).

**10.** Dispositif selon la revendication 9, dans lequel ledit module de détermination de seuil (280) est configuré de manière à déterminer ledit troisième seuil en tant que ($t_c$ x 5 +1) >> 1, où $t_c$ est un seuil d'écrêtage sélectionné pour ledit bloc (10) sur la base dudit paramètre de quantification et X >> Y désigne un décalage à droite de X par $2^Y$, à savoir $X/2^Y$.

**11.** Dispositif selon l'une quelconque des revendications 8 à 10, comportant en outre un module de détermination de seuil (280) configuré de manière à déterminer ledit deuxième seuil comme étant égal à la moitié dudit premier seuil.

**12.** Dispositif selon l'une quelconque des revendications 8 à 11, comportant en outre un module de détermination de seuil (280) configuré de manière à déterminer ledit premier seuil et ledit deuxième seuil sur la base d'un paramètre de quantification sélectionné en vue du codage résiduel dudit bloc (10).

**13.** Dispositif selon la revendication 12, dans lequel ledit module de détermination de seuil (280) est configuré de manière à déterminer ledit premier seuil en tant que β >> 2 et ledit deuxième seuil en tant que β >> 3, dans lequel le paramètre β est déterminé sur la base dudit paramètre de quantification et X >> Y désigne un décalage à droite de X par $2^Y$, à savoir $X/2^Y$.

**14.** Dispositif selon l'une quelconque des revendications 8 à 12, dans lequel :

ledit deuxième calculateur de valeur de décision (220) est configuré de manière à calculer une autre deuxième valeur de décision de filtre pour ledit bloc (10) comme suit

$$|p3_j - p0_j| + |q0_j - q3_j|$$

où $p0_j$ désigne une valeur de pixel d'un pixel qui est le plus proche de, dans une autre ligne de pixels dans ledit bloc (10), ladite limite de bloc (1), $p3_j$ désigne une valeur de pixel d'un pixel qui est le troisième pixel suivant le plus proche de, dans ladite une autre ligne de pixels, ladite limite de bloc (1), $q0_j$ désigne une valeur de pixel d'un pixel dans ledit bloc de voisinage (20) qui est le plus proche de, dans une autre ligne de pixels correspondante, ladite limite de bloc (1), et $q3_j$ désigne une valeur de pixel d'un pixel dans ledit bloc de voisinage (20) qui est le troisième pixel suivant le plus proche de, dans ladite autre ligne de pixels correspondante, ladite limite de bloc (1) ;
ledit deuxième comparateur de seuil (240) est configuré de manière à comparer ladite une autre deuxième valeur de décision de filtre calculée par ledit deuxième calculateur de valeur de décision (220) audit deuxième seuil ; et
ledit sélecteur de filtre (250) est configuré de manière à sélectionner ledit filtre de dégroupage fort en vue de filtrer au moins une valeur de pixel dans ladite une autre ligne de pixels si ladite première valeur de décision de filtre est inférieure audit premier seuil tel que déterminé par ledit premier comparateur de seuil (210), et si ladite une autre deuxième valeur de décision de filtre est inférieure audit deuxième seuil tel que déterminé par ledit deuxième comparateur de seuil (240), et sinon, à sélectionner ledit filtre de dégroupage faible en vue de filtrer au moins une valeur de pixel dans ladite une autre ligne de pixels.

**15.** Codeur (40) comportant un dispositif de commande de filtrage (200) selon l'une quelconque des revendications 8 à 14.

**16.** Décodeur (60) comportant un dispositif de commande de filtrage (200) selon l'une quelconque des revendications 8 à 14.

**17.** Terminal multimédia (70) comportant :

une mémoire (72) configurée de manière à stocker des trames vidéo codées ;
un décodeur (60) selon la revendication 16, configuré de manière à décoder lesdites trames vidéo codées en des trames vidéo décodées ; et
un lecteur multimédia (74) configuré de manière à restituer lesdites trames vidéo décodées en des données vidéo pouvant être affichées sur un écran d'affichage (76).

START
CALCULATE 1ST FILTER DECISION VALUE REPR. OF SMOOTHNESS IN A DIRECTION PARALLEL TO FILTERING DIRECT.
S1
CALCULATE 2ND FILTER DECISION VALUE REPRESENTATIVE OF FLAT LINE APPROXIMATION
S2
S3
1ST FDV<T1
2ND FDV<T2
?
YES
NO
L1
SELECT STRONG DE-BLOCKING FILTER
S4
SELECT WEAK DE-BLOCKING FILTER
S5
STOP

Fig. 1

1
10
12
17
15
13
11
21
23
25
27
20
22

Fig. 2B

Fig. 2A

FROM STEP S2
CALCULATE 3RD FILTER DECISION VALUE REPRESENTATIVE OF ABSOLUTE DIFFERENCE OVER BLOCK BORDER
S10
S11
1ST FDV<T1
2ND FDV<T2
3RD FDV<T3
?
YES
NO
TO STEP S4
TO STEP S5
PIXEL VALUE
PIXEL POSITION
PIXEL VALUE
PIXEL POSITION
PIXEL VALUE
PIXEL POSITION

Fig. 3

Fig. 4A

Fig. 4B

Fig. 4C

FROM STEP S2
DETERMINE $T_3$ BASED ON QUANTIZATION PARAMETER
S20
TO STEP S10
Fig. 5
BLOCK-WISE FILTER DECISION
NO
NO FILTERING
YES
LINE-WISE DECISION BETWEEN STRONG AND WEAK FILTER
STRONG FILTER
WEAK FILTER
Fig. 7
START
DETERMINE $T_1$, $T_2$ BASED ON QUANTIZATION PARAMETER
S30
TO STEP S1
Fig. 6
START
DETERMINE $T_b$ BASED ON QUANTIZATION PARAMETER
S50
TO STEP S40
Fig. 9
FROM STEP S4/S5
FILTER PIXEL VALUES WITH SELECTED FILTER
S60
STOP
Fig. 10

START
CALCULATE BLOCK-SPECIFIC DECISION VALUE REPR. OF SMOOTHNESS IN A DIRECTION PARALLEL TO FILTERING DIRECT.
S40
S41
BDV<T b ?
YES
NO
TO STEP S1
STOP
100
FILTERING CONTROL DEVICE
1ST DECISION VALUE CALCULATOR
2ND DECISION VALUE CALCULATOR
1ST THRESHOLD COMPARATOR
2ND THRESHOLD COMPARATOR
FILTER SELECTOR
110
120
130
140
150

Fig. 8

Fig. 11

200
FILTERING CONTROL DEVICE
1ST DECISION VALUE CALCULATOR
210
2ND DECISION VALUE CALCULATOR
220
FILTER SELECTOR
250
BLOCK. DECIS. VALUE CALCULATOR
290
1ST THRESHOLD COMPARATOR
230
2ND THRESHOLD COMPARATOR
240
THRESHOLD LOOK-UP TABLE
285
BLOCK THRESHOLD COMPARATOR
292
3RD DECISION VALUE CALCULATOR
260
3RD THRESHOLD COMPARATOR
270
THRESHOLD DETERMINER
280
FILTERING SELECTOR
294

Fig. 12

300
FILTERING CONTROL DEVICE
1ST DECISION VALUE CALCULATOR
310
2ND DECISION VALUE CALCULATOR
320
1ST THRESHOLD COMPARATOR
330
2ND THRESHOLD COMPARATOR
340
FILTER SELECTOR
350
FILTERING DEVICE
360
VALUE ADDER
370
30
MEMORY
100
FILTERING CONTROL DEVICE
1ST DECISION VALUE CALCULATOR
110
1ST THRESHOLD COMPARATOR
130
2ND DECISION VALUE CALCULATOR
120
2ND THRESHOLD COMPARATOR
140
FILTER SELECTOR
150
32
CPU

Fig. 13

Fig. 14

p0i
p3i
q0i
q3i
121
122
ABS.
123
ABS.
124
125
120
C O M P
T2
140
141
100
150
&
151
T1
C O M P
131
130
p12
p02
p22
p25
p05
p15
q12
q02
q22
q25
q05
q15
×2
112
111
113
114
ABS.
115
117
118
171
116
119
162
161
163
164
169
110
165
167
168
166

Fig. 15

ENCODER
40
41
42
TRANSFORM
43
QUANTIZATION
44
ENTROPY ENCODER
45
INVERSE QUANTISATION
46
INVERSE TRANSFORM
47
48
FRAME BUFFER
49
INTRA PREDICTION
50
MOTION ESTIMATION/ COMPENSATION
51
100
FILTERING CONTROL DEVICE
+
-
+
+

Fig. 16

DECODER
60
ENTROPY DECODER
61
INVERSE QUANTISATION
62
INVERSE TRANSFORM
63
+
+
64
68
MOTION ESTIMATION/ COMPENSATION
67
INTRA PREDICTION
66
FRAME BUFFER
65
FILTERING CONTROL DEVICE
100

Fig. 17

70
76
MEDIA PLAYER
60
74
DECODER
MEMORY
72

Fig. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20060078048 A


### Non-patent literature cited in the description


- **LIST et al.** Adaptive Deblocking Filter. *IEEE Transactions on Circuits and Systems for Video Technology,* 2003, vol. 13 (7), 614-619